(19) Europäisches Patentamt
European Patent Office
Office européen des brevets

(11) **EP 3 839 490 A1**

(12) **EUROPEAN PATENT APPLICATION**
published in accordance with Art. 153(4) EPC

(43) Date of publication:
**23.06.2021 Bulletin 2021/25**

(21) Application number: **19850386.4**

(22) Date of filing: **24.06.2019**

(51) Int Cl.:
**G01N 23/2251** *(2018.01)*     **D21H 17/70** *(2006.01)*

(86) International application number:
**PCT/JP2019/024885**

(87) International publication number:
**WO 2020/036000 (20.02.2020 Gazette 2020/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **17.08.2018   JP 2018153590**

(71) Applicant: **Nippon Paper Industries Co., Ltd.**
**Tokyo 114-0002 (JP)**

(72) Inventors:
• **FUCHISE, Moe**
**Tokyo 114-0002 (JP)**
• **MATSUMOTO, Hiroto**
**Tokyo 114-0002 (JP)**
• **HASEGAWA, Ayaka**
**Tokyo 114-0002 (JP)**
• **OISHI, Masatoshi**
**Tokyo 114-0002 (JP)**
• **YAMAMOTO, Junji**
**Tokyo 114-0002 (JP)**

(74) Representative: **Cockerton, Bruce Roger**
**Carpmaels & Ransford LLP**
**One Southampton Row**
**London WC1B 5HA (GB)**

(54) **METHOD FOR ANALYZING STRUCTURE INCLUDING FIBER AND INORGANIC PARTICLES**

(57)     The present invention aims to provide a method for analyzing a fiber structure comprising a fiber and inorganic particles. An analysis method according to the present invention is a method for evaluating a structure comprising a fiber and inorganic particles, said method comprising the steps of: (A) capturing a two-dimensional image of the surface of the fiber structure using a scanning electron microscope; (B) denoising the captured image by adjusting each contrast value; and (C) calculating the standard deviation of the contrast value after denoising.

# Fig. 10

**Description**

TECHNICAL FIELD

The present invention relates to structures comprising a fiber and inorganic particles as well as methods for analyzing them.

BACKGROUND ART

Fibers such as woody fibers have various properties based on the functional groups or the like on their surface, but sometimes require surface modification depending on the purposes, and therefore, techniques for modifying the surface of the fibers have already been developed.

For example, a technique for precipitating inorganic particles on a fiber such as a cellulose fiber is disclosed in PTL 1, which describes a complex comprising crystalline calcium carbonate mechanically bonded onto a fiber. Further, PTL 2 describes a technique for preparing a complex of a pulp with calcium carbonate by precipitating calcium carbonate in a suspension of the pulp by the carbonation process.

CITATION LIST

PATENT LITERATURE

PTL 1: JPA 1994-158585
PTL 2: US Patent No. 5679220

SUMMARY OF INVENTION

TECHNICAL PROBLEM

Fiber structures prepared from complex fibers comprising a fiber such as cellulose covered by inorganic particles on its surface are distinct from fiber structures obtained by simply mixing the fiber and the inorganic particles, but they cannot be sometimes distinguished from each other by such parameters as the weight percentage of the inorganic particles. Under such circumstances, the present invention aims to provide a method for analyzing structures comprising a fiber and inorganic particles.

The present invention also aims to provide complex fibers in which a fiber and inorganic particles are strongly complexed with each other. Considering that it is difficult to evaluate whether or not a fiber and inorganic particles are strongly bound to each other on the basis of the weight ratio between the fiber and the inorganic particles or the coverage ratio of the fiber or the like, it is also a technical objective of the present invention to judge whether or not a fiber and inorganic particles are strongly complexed with each other and to obtain a complex fiber and a fiber structure thereof in which the fiber and the inorganic particles are strongly complexed with each other based on the judgement.

SOLUTION TO PROBLEM

The present invention includes, but not limited to, the following:

[1] A method for evaluating a structure comprising a fiber and inorganic particles, said method comprising the steps of:

(A) capturing a two-dimensional image of the surface of the fiber structure using a scanning electron microscope;
(B) denoising the captured image by adjusting each contrast value; and
(C) calculating the standard deviation of the contrast value after denoising.

[2] The method of [1], wherein the fiber is a cellulose fiber.
[3] The method of [1] or [2], wherein the inorganic particles at least partially comprise a metal salt of calcium, silicic acid, magnesium, barium or aluminum, or metal particles containing titanium, copper or zinc.
[4] The method of any one of [1] to [3], wherein the fiber structure is in the form of a sheet.
[5] The method of any one of [1] to [4], wherein the fiber structure is a molding.
[6] A fiber structure formed from a complex fiber of a fiber with inorganic particles, which has a standard deviation value of 33 or less as determined by a method comprising the steps of:

(A) capturing a two-dimensional image of the surface of the fiber structure using a scanning electron microscope at a magnification of 500X;
(B) denoising the captured image by adjusting the contrast value of each pixel to the median of its neighboring 3 x 3 pixels (the fifth value) using a median filter; and
(C) calculating the standard deviation of the contrast value after denoising.

[7] The fiber structure of [6], wherein the fiber is a cellulose fiber.
[8] The fiber structure of [6] or [7], wherein the inorganic particles at least partially comprise a metal salt of calcium, silicic acid, magnesium, barium or aluminum, or metal particles containing titanium, copper or zinc.
[9] The fiber structure of any one of [6] to [8], which is in the form of a sheet.
[10] The fiber structure of any one of [6] to [9], which is a molding.
[11] The fiber structure of any one of [6] to [10], which has a standard deviation value of 33 or less when determined on both sides of the fiber structure.
[12] The fiber structure of any one of [6] to [11], which contains an internal additive having a molecular weight of 5,000,000 Da or more.
[13] The fiber structure of any one of [6] to [12], which contains an internal additive having a charge density of -6 to +6 meq/g.
[14] A process for preparing a fiber structure comprising a complex fiber of a fiber with inorganic particles, said process comprising the steps of: (1) synthesizing inorganic particles in a solution in the presence of a fiber to give a complex fiber of the fiber with the inorganic particles; and (2) forming a fiber structure from the complex fiber of the fiber with the inorganic particles;
wherein the standard deviation of the fiber structure is determined by a method comprising the steps of:

(A) capturing a two-dimensional image of the surface of the fiber structure using a scanning electron microscope at a magnification of 500X;
(B) denoising the captured image by adjusting the contrast value of each pixel to the median of its neighboring 3 x 3 pixels (the fifth value) using a median filter; and
(C) calculating the standard deviation of the contrast value after denoising.

[15] The process of [14], wherein the fiber structure has a standard deviation value of 33 or less when determined on both sides of the fiber structure.
[16] The process of [14] or [15], wherein the fiber structure is formed into a predetermined shape by dewatering through a mesh element and then drying.
[17] The process of any one of [14] to [16], wherein the fiber is a cellulose fiber.
[18] The process of any one of [14] to [17], wherein the inorganic particles at least partially comprise a metal salt of calcium, silicic acid, magnesium, barium or aluminum, or metal particles containing titanium, copper or zinc.
[19] The process of any one of [14] to [18], wherein the fiber structure is in the form of a sheet.
[20] The process of any one of [14] to [19], wherein the fiber structure is a molding.

ADVANTAGEOUS EFFECTS OF INVENTION

The present invention allows for the evaluation of characteristics that could not be analyzed by conventional analysis methods such as inorganic content analysis. According to the present invention, fiber structures obtained from complex fibers comprising a fiber covered by inorganic particles on its surface can be distinguished from fiber structures obtained by simply mixing the fiber and the inorganic particles, even if they contain the inorganic particles at the same weight percentage.
According to the present invention, complex fibers in which a fiber and inorganic particles are strongly complexed with each other can be obtained as well as fiber structures comprising the complex fibers. The fiber structures obtained by the present invention can be in the form of a sheet, molding, board or block. When the complex fibers obtained by the present invention are formed into a sheet, molding, board, block the like, they exhibit high retention and good drainage, and the inorganic particles are uniformly distributed in the resulting sheet, and the fiber is less exposed.

BRIEF DESCRIPTION OF DRAWINGS

Fig. 1A shows an electron micrograph of Sample A (magnification: 3000X).

Fig. 1B is a schematic diagram showing a reaction system used in Experiment 1 (Sample A).

Fig. 1C is a schematic diagram showing the ultrafine bubble generator used in Experiment 1 (Sample A).

Fig. 2A shows an electron micrograph of Sample B (magnification: 3000X).

Fig. 2B is a schematic diagram showing a reaction system used in Experiment 1 (Sample B).

Fig. 3 shows an electron micrograph of Sample C (magnification: 3000X).

Fig. 4 shows an electron micrograph of Sample D (magnification: 3000X).

Fig. 5 shows an electron micrograph of Sample E (magnification: 3000X).

Fig. 6 shows an electron micrograph of Sample F (magnification: 3000X).

Fig. 7 shows an electron micrograph of Sample G (magnification: 3000X).

Fig. 8 shows an electron micrograph of Sample H (magnification: 3000X).

Fig. 9 shows an electron micrograph of Sample I (magnification: 3000X).

Fig. 10 shows an electron micrograph of Sample J (magnification: 3000X).

Fig. 11A shows electron micrographs of Sheet 1 (before denoising; magnification: 500X; upper left: top side 1; upper right: top side 2; lower left: bottom side 1; lower right: bottom side 2).

Fig. 11B shows electron micrographs of Sheet 1 (after denoising; magnification: 500X; upper left: top side 1; upper right: top side 2; lower left: bottom side 1; lower right: bottom side 2).

Fig. 12 shows electron micrographs of Sheet 2 (magnification: 500X; upper left: top side 1; upper right: top side 2; lower left: bottom side 1; lower right: bottom side 2).

Fig. 13 shows electron micrographs of Sheet 3 (magnification: 500X; upper left: top side 1; upper right: top side 2; lower left: bottom side 1; lower right: bottom side 2).

Fig. 14 shows electron micrographs of Sheet 4 (magnification: 500X; upper left: top side 1; upper right: top side 2; lower left: bottom side 1; lower right: bottom side 2).

Fig. 15 shows electron micrographs of Sheet 5 (magnification: 500X; upper left: top side 1; upper right: top side 2; lower left: bottom side 1; lower right: bottom side 2).

Fig. 16 shows electron micrographs of Sheet 6 (magnification: 500X; upper left: top side 1; upper right: top side 2; lower left: bottom side 1; lower right: bottom side 2).

Fig. 17 shows electron micrographs of Sheet 7 (magnification: 500X; upper left: top side 1; upper right: top side 2; lower left: bottom side 1; lower right: bottom side 2).

Fig. 18 shows electron micrographs of Sheet 8 (magnification: 500X; upper left: top side 1; upper right: top side 2; lower left: bottom side 1; lower right: bottom side 2).

Fig. 19 shows electron micrographs of Sheet 9 (magnification: 500X; upper left: top side 1; upper right: top side 2; lower left: bottom side 1; lower right: bottom side 2).

Fig. 20 shows electron micrographs of Sheet 10 (magnification: 500X; upper left: top side 1; upper right: top side 2; lower left: bottom side 1; lower right: bottom side 2).

Fig. 21 shows electron micrographs of Sheet 11 (magnification: 500X; upper left: top side 1; upper right: top side 2; lower left: bottom side 1; lower right: bottom side 2).

Fig. 22 shows electron micrographs of Sheet 12 (magnification: 500X; upper left: top side 1; upper right: top side 2; lower left: bottom side 1; lower right: bottom side 2).

Fig. 23 shows electron micrographs of Sheet a (magnification: 500X; upper left: top side 1; upper right: top side 2; lower left: bottom side 1; lower right: bottom side 2).

Fig. 24 shows electron micrographs of Sheet b (magnification: 500X; upper left: top side 1; upper right: top side 2; lower left: bottom side 1; lower right: bottom side 2).

Fig. 25 shows electron micrographs of Sheet c (magnification: 500X; upper left: top side 1; upper right: top side 2; lower left: bottom side 1; lower right: bottom side 2).

Fig. 26 shows electron micrographs of Sheet d (magnification: 500X; upper left: top side 1; upper right: top side 2; lower left: bottom side 1; lower right: bottom side 2).

Fig. 27 shows electron micrographs of Sheet e (magnification: 500X; upper left: top side 1; upper right: top side 2; lower left: bottom side 1; lower right: bottom side 2).

Fig. 28 shows histograms of contrast values prepared from the electron micrographs (after denoising) of Sheet 1 (upper left: top side 1; upper right: top side 2; lower left: bottom side 1; lower right: bottom side 2).

Fig. 29 shows histograms of contrast values prepared from the electron micrographs (after denoising) of Sheet 2 (upper left: top side 1; upper right: top side 2; lower left: bottom side 1; lower right: bottom side 2).

Fig. 30 shows histograms of contrast values prepared from the electron micrographs (after denoising) of Sheet 3 (upper left: top side 1; upper right: top side 2; lower left: bottom side 1; lower right: bottom side 2).

Fig. 31 shows histograms of contrast values prepared from the electron micrographs (after denoising) of Sheet 4 (upper left: top side 1; upper right: top side 2; lower left: bottom side 1; lower right: bottom side 2).

Fig. 32 shows histograms of contrast values prepared from the electron micrographs (after denoising) of Sheet 5 (upper left: top side 1; upper right: top side 2; lower left: bottom side 1; lower right: bottom side 2).

Fig. 33 shows histograms of contrast values prepared from the electron micrographs (after denoising) of Sheet 6 (upper left: top side 1; upper right: top side 2; lower left: bottom side 1; lower right: bottom side 2).

Fig. 34 shows histograms of contrast values prepared from the electron micrographs (after denoising) of Sheet 7 (upper left: top side 1; upper right: top side 2; lower left: bottom side 1; lower right: bottom side 2).

Fig. 35 shows histograms of contrast values prepared from the electron micrographs (after denoising) of Sheet 8 (upper left: top side 1; upper right: top side 2; lower left: bottom side 1; lower right: bottom side 2).

Fig. 36 shows histograms of contrast values prepared from the electron micrographs (after denoising) of Sheet 9 (upper left: top side 1; upper right: top side 2; lower left: bottom side 1; lower right: bottom side 2).

Fig. 37 shows histograms of contrast values prepared from the electron micrographs (after denoising) of Sheet 10 (upper left: top side 1; upper right: top side 2; lower left: bottom side 1; lower right: bottom side 2).

Fig. 38 shows histograms of contrast values prepared from the electron micrographs (after denoising) of Sheet 11 (upper left: top side 1; upper right: top side 2; lower left: bottom side 1; lower right: bottom side 2).

Fig. 39 shows histograms of contrast values prepared from the electron micrographs (after denoising) of Sheet 12 (upper left: top side 1; upper right: top side 2; lower left: bottom side 1; lower right: bottom side 2).

Fig. 40 shows histograms of contrast values prepared from the electron micrographs (after denoising) of Sheet a (upper left: top side 1; upper right: top side 2; lower left: bottom side 1; lower right: bottom side 2).

Fig. 41 shows histograms of contrast values prepared from the electron micrographs (after denoising) of Sheet b (upper left: top side 1; upper right: top side 2; lower left: bottom side 1; lower right: bottom side 2).

Fig. 42 shows histograms of contrast values prepared from the electron micrographs (after denoising) of Sheet c (upper left: top side 1; upper right: top side 2; lower left: bottom side 1; lower right: bottom side 2).

Fig. 43 shows histograms of contrast values prepared from the electron micrographs (after denoising) of Sheet d (upper left: top side 1; upper right: top side 2; lower left: bottom side 1; lower right: bottom side 2).

Fig. 44 shows histograms of contrast values prepared from the electron micrographs (after denoising) of Sheet e (upper left: top side 1; upper right: top side 2; lower left: bottom side 1; lower right: bottom side 2).

Fig. 45 shows electron micrographs of Molding 1 (magnification: 500X; upper left: top side 1; upper right: top side 2; lower left: bottom side 1; lower right: bottom side 2).

Fig. 46 shows electron micrographs of Molding 2 (magnification: 500X; upper left: top side 1; upper right: top side 2; lower left: bottom side 1; lower right: bottom side 2).

Fig. 47 shows histograms of contrast values prepared from the electron micrographs (after denoising) of Molding 1 (upper left: top side 1; upper right: top side 2; lower left: bottom side 1; lower right: bottom side 2).

Fig. 48 shows histograms of contrast values prepared from the electron micrographs (after denoising) of Molding 2 (upper left: top side 1; upper right: top side 2; lower left: bottom side 1; lower right: bottom side 2).

Fig. 49 shows an electron micrograph of Sample K (magnification: 3000X).

Fig. 50 shows electron micrographs of Sheet 13 (magnification: 500X; upper left: top side 1; upper right: top side 2; lower left: bottom side 1; lower right: bottom side 2).

Fig. 51 shows electron micrographs of Sheet 14 (magnification: 500X; upper left: top side 1; upper right: top side 2; lower left: bottom side 1; lower right: bottom side 2).

Fig. 52 shows histograms of contrast values prepared from the electron micrographs (after denoising) of Sheet 13 (upper left: top side 1; upper right: top side 2; lower left: bottom side 1; lower right: bottom side 2).

Fig. 53 shows histograms of contrast values prepared from the electron micrographs (after denoising) of Sheet 14 (upper left: top side 1; upper right: top side 2; lower left: bottom side 1; lower right: bottom side 2).

DESCRIPTION OF EMBODIMENTS

The present invention relates to structures comprising a fiber and inorganic particles as well as methods for analyzing them.

(The step of capturing a scanning electron microscopic image)

In the present invention, images observed by scanning electron microscopy (SEM) are used for analysis. If an optical microscope, laser microscope, or digital microscope is used for observation, it is difficult to make clear the difference in contrast between fibers and inorganic materials, and a pretreatment such as staining of either fibers or inorganic materials is required to make it clear, which complicates the procedure. On the other hand, transmission electron microscopy (TEM) is useful in terms of image contrast, but requires a difficult and very laborious step for slicing samples. In contrast to these, SEM is suitable for analysis because it makes easy to distinguish the difference in contrast between fibers and inorganic materials and also involves easy operation for preparing samples, which allows easy observation even by unskilled persons.

The type of SEM used in the present invention is not specifically limited, and any of thermal electron emission, field emission (FE), thermal field emission (TFE), or Schottky emission (SE) type can conveniently be used.

For observation by SEM, specimens can be subjected to a conductive coating treatment in advance to prevent them from being charged (charged up). A vapor deposition apparatus can be used for the conductive coating treatment, such as an ion sputter by which microparticles of a metal such as gold, platinum, platinum/palladium or the like are vapor-deposited, or a carbon coater by which carbon is vapor-deposited, or an osmium coater by which osmium tetroxide is vapor-deposited. Specimens are preferably subjected to a conductive coating treatment by any of the methods shown above except that no conductive coating treatment is required when they are observed in low vacuum mode.

Specimens observed by SEM preferably have a mass of 10 to 2000 $g/m^2$ or a thickness of 20 $\mu$m to 5000 $\mu$m (5 mm). Fiber structures having a large thickness can be sliced horizontally to avoid influence on the surface properties of specimens observed by SEM. This is because thick specimens are charged during observation so that they become difficult to observe.

In one embodiment, a specimen to be observed by SEM is cut out into dimensions of 3 mm x 3 mm or more and secured onto a specimen mount with a double-sided adhesive tape, after which it is observed. Observation can be performed at any magnification of 50 to 100000X. In the present invention, the magnification is preferably 100 to 1000X, especially preferably 500X. If the magnification is 100 to 1000X, the aspect of the surface of fibers or the distribution of inorganic materials can be observed easily.

The observation mode may be either the secondary electron mode or the reflected electron mode. The surface conditions of sheets can be observed clearly by observing secondary electrons. On the other hand, the difference in composition between fibers and inorganic materials can be observed more exactly as a difference in contrast by observing reflected electrons.

(The step of denoising the SEM image by adjusting each contrast value)

The image observed with an electron microscope is denoised by removing areas having an extremely high or low contrast (noises). Denoising can be performed by importing the image into a given image processing software, for example. An image processing software that can conveniently be used includes, for example, ImageJ (U.S. National Institutes of Health).

The two-dimensional image captured by SEM contains areas having an extremely high or low contrast (lightness) (noises) so that analysis values would be influenced by these noises if it was directly analyzed. Thus, the two-dimensional image taken by SEM is denoised in the present invention. Among various denoising techniques, the median (middle value) filter or average filter can be used, for example. The median filter has the function of replacing each pixel (picture element) by the median of its neighboring pixels (in a range that can be set at will). Alternatively, the average filter can be used, in which case each pixel is replaced by the average of its neighboring pixels. When the analysis software ImageJ is used, each pixel is replaced by the median of its neighboring 3 x 3 pixels (the fifth value) by selecting the "Process" tab, next "Noise" and then "Despeckle" (median filter).

(The step of calculating the standard deviation ($\sigma$) of the contrast)

Subsequently, the standard deviation ($\sigma$) of the contrast of the denoised image is calculated. To this end, a histogram of the contrast (intensity of luminance) of the denoised image is preferably constructed. As used herein, the histogram refers to a graph in which the abscissa represents the grayscale level and the ordinate represents the number of pixels. Histogramming can be performed by using an image processing software. When ImageJ is used, a histogram of the image is displayed by selecting the "Analyze" tab and then "Histogram". The standard deviation can be calculated from the numerical data represented by the resulting histogram (the contrast value after denoising), and when ImageJ is used, the standard deviation is displayed as "StdDev" below the displayed histogram.

Fiber structures comprising a complex fiber

The analysis methods of the present invention are applied to structures comprising a fiber and inorganic particles. The fiber structures to be analyzed comprise a fiber and inorganic particles such as a complex fiber, and can be in various shapes such as moldings, sheets, boards, blocks and the like, for example, and can be formed into the various shapes by dewatering a slurry containing the fiber using a mesh element, for example.

As for thick structures comprising a fiber and inorganic particles such as moldings and blocks, only the surface layer can be observed after it has been sliced out if desired, as described above. Possible slicing methods include, but not specifically limited to, tearing a structure in parallel with the surface layer using a tool such as a cutter, for example.

The specimen to be observed by SEM desirably has an observed surface as smooth as possible. This is because if the observed surface has significant irregularities, these irregularities will be observed as a contrast with a microscope so that they may influence the standard deviation of the contrast by image analysis. When a sample having a significantly uneven surface is tested, it should preferably be pressed at a suitable time before or after a specimen is cut out for observation. Possible pressing methods include, but not specifically limited to, pressing the sample by applying a load on it by hands or a weight between smooth plates or pressing the sample by passing it through a machine such as a press or a calender.

In one preferred aspect, the present invention provides a fiber structure comprising a fiber and inorganic particles, wherein the standard deviation of the contrast value determined by the method described above is 33 or less. The fiber structure is preferably in the form of a sheet, and the standard deviation of the contrast value is preferably 33 or less, more preferably 32.5 or less, or may be 32.0 or less on both sides. The lower limit of the contrast value is not specifically limited, but can be, for example, 25 or more.

The evaluation methods of the present invention can be applied to analyze fiber structures used for various applications, and they can be widely used for any applications including, for example, papers, fibers, cellulosic composite materials, filter materials, paints, plastics and other resins, rubbers, elastomers, ceramics, glasses, tires, building materials (asphalt, asbestos, cement, boards, concrete, bricks, tiles, plywoods, fiber boards, ceiling materials, wall materials, floor materials, roof materials and the like), furniture, automobile parts, various carriers (catalyst carriers, drug carriers, agrochemical carriers, microbial carriers and the like), adsorbents (decontaminants, deodorants, dehumidifying agents and the like), antimicrobial materials, antivirals, anti-wrinkle agents, clay, abrasives, friction materials, modifiers, repairing materials, thermal insulation materials, thermal resistant materials, heat dissipating materials, damp proofing materials, water repellent materials, waterproofing materials, light shielding materials, sealants, shielding materials, insect repellents, adhesives, medical materials, paste materials, discoloration inhibitors, electromagnetic wave absorbers, insulating materials, acoustic insulation materials, interior materials, vibration damping materials, semiconductor sealing materials, radiation shielding materials, and the like. They also can be used for various fillers, coating agents and the like in the applications shown above. Among them, they are preferably applied for adsorbents, antimicrobial materials, antivirals, friction materials, radiation shielding materials, flame retardant materials, building materials, and thermal insulation materials.

The evaluation methods of the present invention may also be applied to analyze fiber structures such as papers including, for example, printing papers, newsprint papers, inkjet printing papers, PPC copier papers, kraft papers, woodfree papers, coated papers, coated fine papers, wrapping papers, thin papers, colored woodfree papers, cast-coated papers, carbonless copy papers, label papers, heat-sensitive papers, various fancy papers, water-soluble papers, release papers, process papers, hanging base papers, flame retardant papers (incombustible papers), base papers for laminated boards, papers for printed electronics, battery separators, cushion papers, tracing papers, impregnated papers, papers for ODP, building papers, papers for decorative building materials, envelope papers, papers for tapes, heat exchange papers, chemical fiber papers, aseptic papers, water resistant papers, oil resistant papers, heat resistant papers, photocatalytic papers, cosmetic papers (facial blotting papers and the like), various sanitary papers (toilet papers, facial tissues, wipers, diapers, menstrual products and the like), cigarette rolling papers, paperboards (liners, corrugating media, white paperboards and the like), base papers for paper plates, cup papers, baking papers, abrasive papers, synthetic papers and the like. Thus, complexes of a fiber with inorganic particles can be formed into sheets in which the inorganic particles are not only more readily retained but also uniformly dispersed without being aggregated in contrast to simple mixtures of the fiber with the inorganic particles, and the present invention makes it possible to analyze these sheets easily.

In the present invention, various molded products (articles) can be analyzed as described above. In cases where fiber structures in the form of a sheet are prepared, for example, paper machines (sheet-forming machines) used for preparing them include, for example, Fourdrinier machines, cylinder machines, gap formers, hybrid formers, multiply board machines, known sheet-forming machines combining the papermaking methods of these machines and the like. The linear pressure in the press section of the paper machines and the linear calendering pressure in a subsequent optional calendering process can be both selected within a range convenient for the runnability and the performance of the complex fiber sheets. Further, the sheets thus formed may be impregnated or coated with starches, various polymers, pigments and mixtures thereof.

In cases where fiber structures in the form of a sheet are prepared, wet and/or dry strength additives (paper strength additives) can be added during sheet forming. This allows the strength of the complex fiber sheets to be improved. Strength additives include, for example, resins such as urea-formaldehyde resins, melamine-formaldehyde resins, polyamides, polyamines, epichlorohydrin resins, vegetable gums, latexes, polyethylene imines, glyoxal, gums, mannogalactan polyethylene imines, polyacrylamide resins, polyvinylamines, and polyvinyl alcohols; composite polymers or copolymers composed of two or more members selected from the resins listed above; starches and processed starches; carboxymethyl cellulose, guar gum, urea resins and the like. The amount of the strength additives to be added is not specifically limited.

Further, high molecular weight polymers or inorganic materials can also be added to promote the adhesion of fillers to fibers or to improve the retention of fillers or fibers.

For example, coagulants can be added, including cationic polymers such as polyethylene imines and modified polyethylene imines containing a tertiary and/or quaternary ammonium group, polyalkylene imines, dicyandiamide polymers, polyamines, polyamine/epichlorohydrin polymers, polymers of dialkyldiallyl quaternary ammonium monomers, dialkylaminoalkyl acrylates, dialkylaminoalkyl methacrylates, dialkylaminoalkyl acrylamides and dialkylaminoalkyl methacrylamides with acrylamides, monoamine/epihalohydrin polymers, polyvinylamines and polymers containing a vinylamine moiety as well as mixtures thereof; cation-rich zwitterionic polymers containing an anionic group such as a carboxyl or sulfone group copolymerized in the molecules of the polymers listed above; mixtures of a cationic polymer and an anionic or zwitterionic polymer and the like. Further, retention aids such as cationic or anionic or zwitterionic polyacrylamide-based materials can be used. These may be applied as retention systems called dual polymers in combination with at least one or more cationic or anionic polymers or may be applied as multicomponent retention systems in combination with at least one or more anionic inorganic microparticles such as bentonite, colloidal silica, polysilicic acid, microgels of polysilicic acid or polysilicic acid salts and aluminum-modified products thereof or in combination with one or more organic microparticles having a particle size of 100 $\mu$m or less called micropolymers composed of crosslinked/polymerized acrylamides. Especially when the polyacrylamide-based materials used alone or in combination with other materials have a weight-average molecular weight of 2,000,000 Da or more, preferably 5,000,000 Da or more as determined by intrinsic viscosity measurement, good retention can be achieved, and when the acrylamide-based materials have a molecular weight of 10,000,000 Da or more and less than 30,000,000 Da, very high retention can be achieved. The polyacrylamide-based materials may be in the form of an emulsion or a solution. Specific compositions of such materials are not specifically limited so far as they contain an acrylamide monomer unit as a structural unit therein, but include, for example, copolymers of a quaternary ammonium salt of an acrylic acid ester and an acrylamide, or ammonium salts obtained by copolymerizing an acrylamide and an acrylic acid ester, followed by quaternization. The cationic charge density of the cationic polyacrylamide-based materials is not specifically limited.

Preferably, the aforementioned internal additives (dry strength additives, wet strength additives, coagulants, retention aids and the like) used in the present invention do not have an extremely high charge density. This is because if a chemical having a high charge density is used, the force by which inorganic particles are aggregated together exceeds the force by which inorganic particles adhere to the surface of pulp (bonding force) so that the addition of the chemical may cause the inorganic particles to be detached from the surface of the synthesized fiber complex. The charge density preferably ranges from -6 to +6 meq/g, more preferably -4 to +4 meq/g, especially preferably -2 to +2 meq/g. The molecular weight of these internal additives may also sometimes influence the detachment of inorganic particles from the surface of the fiber complex. Even if a large amount of a chemical having a molecular weight of 5,000,000 Da or more is added, inorganic particles are less likely to be detached from the surface of the fiber complex, but if the molecular weight is less than 5,000,000 Da, they may be more likely to be detached. Therefore, when a chemical having a molecular weight of less than 5,000,000 Da and a high charge density is used, it must be added in an appropriately controlled amount. The appropriate amount to be added depends on the type of inorganic materials complexed and the molecular structure of the chemical used, but when a chemical having a molecular weight of less than 5,000,000 Da and a charge density of 2.1 or more in absolute value is used, for example, a typical amount added is preferably 1 % or less based on the solids content of the fiber complex. More preferably, it is 0.8 % or less, still more preferably 0.5 % or less, especially preferably 0.2 % or less. It can also be 0.1 % or less, or 0.05% (500 ppm) or less, or 0.03 % (300 ppm) or less.

Other additives include drainage aids, internal sizing agents, pH modifiers, antifoaming agents, pitch control agents, slime control agents, bulking agents, inorganic particles (the so-called fillers) such as calcium carbonate, kaolin, talc and silica and the like depending on the purposes. The amount of these additives to be used is not specifically limited.

The basic weight (i.e., basis weight: the weight per square meter) of the sheets can be appropriately controlled depending on the purposes, and it is advantageously 60 to 1200 g/m$^2$ for use as, for example, building materials because of high strength and low drying load during preparation. Alternatively, the basis weight of the sheets can be 1200 g/m$^2$ or more, e.g., 2000 to 110000 g/m$^2$. Further, sheets having a basis weight of 60 g/m$^2$ or less can conveniently be used for sanitary goods made from paper or nonwoven fabric or the like such as wipers (wet or dry), facial tissues, towels and the like. For example, the basis weight can also be 10 to 60 g/m$^2$.

The fiber structures of the present invention can be formed into various shapes by dewatering a slurry containing a fiber using a mesh element, for example. The fiber structures to be analyzed by the present invention can also be prepared by using molding techniques other than sheet forming, and molded products can be obtained by the so-called molding process involving casting a raw material into a mold and then dewatering by suction and drying it or the process involving foaming a raw material to give a molded product such as foam molding. Alternatively, molded products in the form of a sheet can be obtained by the process involving spreading a raw material over the surface of a substrate of a resin or metal or the like and drying it, and then releasing the dried material from the substrate.

Further, the fiber structures can be formed into a board by compression molding under pressure and heat as typically used for preparing a board of an inorganic material such as cement or gypsum, or can be formed into a block. They can be not only formed into a sheet that can typically be bent or rolled up, but also formed into a board if more strength is needed. The board can be formed to represent a raised and recessed pattern by using a patterned mold during molding or applying a stamping process after molding. Boards having such design features can conveniently be used as interior materials such as wall materials, ceiling materials, floor materials, furniture and the like. They can also be formed into a thick mass, i.e., a block such as a rectangular cuboid or a cube, for example.

In the fiber structures to be analyzed by the present invention, only one complex fiber can be used, or a mixture of two or more complex fibers can be used. When two or more complex fibers are used, they can be used as a premix of them or can be mixed after they have been individually compounded, dried and molded.

Further, molded products comprising a complex fiber to which various organic materials such as polymers or various inorganic materials such as pigments have been added afterwards may also be analyzed.

According to the present invention, fiber structures that have been printed on can be analyzed. The printing method is not specifically limited, and known methods can be used including, for example, offset printing, silkscreen printing, screen printing, gravure printing, microgravure printing, flexographic printing, letterpress printing, sticker printing, business form printing, on demand printing, furnisher roll printing, inkjet printing and the like. Among them, inkjet printing is preferred in that a comprehensive layout need not be prepared in contrast to offset printing and it can be performed even on large sheets because large size inkjet printers are relatively easily available. On the other hand, flexographic printing can also conveniently be used for molded products formed into such a shape as a board, molding or block because it can be performed successfully even on molded products having a relatively uneven surface.

Further, the printed image formed by printing may have any type of pattern as desired including, but not specifically limited to, wood texture patterns, stone texture patterns, fabric texture patterns, objective patterns, geometric patterns, letters, symbols, or a combination thereof, or may be filled with a solid color.

Synthesis of complex fibers

The fiber complexed with inorganic particles is preferably used in such an amount that 15 % or more of the surface of the fiber is covered by the inorganic particles, and the weight ratio between the fiber and the inorganic particles can be, for example, 5/95 to 95/5, or may be 10/90 to 90/10, 20/80 to 80/20, 30/70 to 70/30, or 40/60 to 60/40.

In preferred embodiments of the complex fibers of the present invention, 15 % or more, more preferably 40 % or more, still more preferably 60 % or more, further more preferably 75 % or more of the surface of the fiber is covered by the inorganic particles, and when the surface of the cellulose fiber is covered at such an area ratio, characteristics attributed to the inorganic particles appear prominently while characteristics attributed to the fiber surface diminish.

The complex fibers of a fiber with inorganic particles can be synthesized by synthesizing inorganic particles in a solution containing a fiber such as a cellulose fiber, for example. This is because the surface of the fiber provides a suitable site where the inorganic particles are precipitated, thus facilitating the synthesis of a complex fiber. A process for synthesizing a complex fiber may comprise, for example, stirring/mixing a solution containing a fiber and precursors of inorganic particles in an open reaction vessel to synthesize a complex or injecting an aqueous suspension containing a fiber and precursors of inorganic particles into a reaction vessel to synthesize a complex. As described below, inorganic particles may be synthesized in the presence of cavitation bubbles generated during the injection of an aqueous suspension of a precursor of an inorganic material into a reaction vessel. Inorganic particles can be synthesized on a cellulose fiber by a known reaction in either case.

Generally, inorganic particles are known to be produced through the process of: clustering (repeated association and dissociation of a small number of atoms or molecules), nucleation (transition from a cluster to a stable aggregate in which associated atoms or molecules no longer dissociate when the cluster exceeds a critical size), and growth (capturing of additional atoms or molecules by a nucleus to form a larger particle), and it is said that nucleation is more likely to occur when the concentration of the raw material or the reaction temperature is higher. The complex fibers of the present invention comprising a cellulose fiber strongly covered by inorganic particles on its surface can be obtained primarily by controlling the concentration of the raw material, the beating degree (specific surface area) of pulp, the viscosity of the solution containing the fiber, the concentrations and feed rates of chemicals added, the reaction temperature, and the stirring speed so that nuclei are efficiently bound onto the fiber.

In the present invention, a liquid may be injected under conditions where cavitation bubbles are generated in a reaction vessel or a liquid may be injected under conditions where cavitation bubbles are not generated. The reaction vessel is preferably a pressure vessel in either case. As used herein, the term "pressure vessel" refers to a vessel that can withstand a pressure of 0.005 MPa or more. Under conditions where cavitation bubbles are not generated, the pressure in the pressure vessel is preferably 0.005 MPa or more and 0.9 MPa or less expressed in static pressure.

(Cavitation bubbles)

For synthesizing the complex fibers of the present invention, inorganic particles can be precipitated in the presence of cavitation bubbles. As used herein, the term "cavitation" refers to a physical phenomenon in which bubbles are generated and disappear in the flow of a fluid in a short time due to a pressure difference. The bubbles generated by cavitation (cavitation bubbles) develop from very small "bubble nuclei" of 100 μm or less present in a liquid when the pressure drops below the saturated vapor pressure in the fluid only for a very short time.

In the present invention, cavitation bubbles can be generated in a reaction vessel by a known method. For example, it is possible to generate cavitation bubbles by injecting a fluid under high pressure, or by stirring at high speed in a fluid, or by causing an explosion in a fluid, or by using an ultrasonic vibrator (vibratory cavitation) or the like.

In the present invention, the reaction solution of raw materials or the like can be directly used as a jet liquid to generate cavitation, or some fluid can be injected into the reaction vessel to generate cavitation bubbles. The fluid forming a liquid jet may be any of a liquid, a gas, or a solid such as powder or pulp or a mixture thereof so far as it is in a flowing state. Moreover, another fluid such as carbonic acid gas can be added as an additional fluid to the fluid described above, if desired. The fluid described above and the additional fluid may be injected as a homogeneous mixture or may be injected separately.

The term "liquid jet" refers to a jet of a liquid or a fluid containing solid particles or a gas dispersed or mixed in a liquid, such as a liquid jet containing a pulp or a raw material slurry of inorganic particles or bubbles. The gas referred to here may contain bubbles generated by cavitation.

The flow rate and pressure are especially important for cavitation because it occurs when a liquid is accelerated and a local pressure drops below the vapor pressure of the liquid. Therefore, the cavitation number σ, which is a fundamental dimensionless number representing a cavitation state, is desirably 0.001 or more and 0.5 or less, preferably 0.003 or more and 0.2 or less, especially preferably 0.01 or more and 0.1 or less. If the cavitation number σ is less than 0.001, little benefit is obtained because the pressure difference from the surroundings is small when cavitation bubbles collapse, but if it is greater than 0.5, the pressure difference in the flow is too small to generate cavitation.

When cavitation is generated by emitting a jetting liquid through a nozzle or an orifice tube, the pressure of the jetting liquid (upstream pressure) is desirably 0.01 MPa or more and 30 MPa or less, preferably 0.7 MPa or more and 20 MPa or less, more preferably 2 MPa or more and 15 MPa or less. If the upstream pressure is less than 0.01 MPa, little benefit is obtained because a pressure difference is less likely to occur from the downstream pressure. If the upstream pressure is higher than 30 MPa, a special pump and pressure vessel are required and energy consumption increases, leading to cost disadvantages. On the other hand, the pressure in the vessel (downstream pressure) is preferably 0.005 MPa or more and 0.9 MPa or less expressed in static pressure. Further, the ratio between the pressure in the vessel and the pressure of the jetting liquid is preferably in the range of 0.001 to 0.5.

In the present invention, inorganic particles can also be synthesized by injecting a jetting liquid under conditions where cavitation bubbles are not generated. Specifically, the pressure of the jetting liquid (upstream pressure) is controlled at 2 MPa or less, preferably 1 MPa or less, while the pressure of the jetting liquid (downstream pressure) is released, more preferably 0.05 MPa or less.

The jet flow rate of the jetting liquid is desirably in the range of 1 m/sec or more and 200 m/sec or less, preferably in the range of 20 m/sec or more and 100 m/sec or less. If the jet flow rate is less than 1 m/sec, little benefit is obtained because the pressure drop is too small to generate cavitation. If it is greater than 200 m/sec, however, special equipment is required to generate high pressure, leading to cost disadvantages.

In the present invention, cavitation may be generated in the reaction vessel where inorganic particles are synthesized. The process can be run in one-pass mode, or can be run through a necessary number of cycles. Further, the process can be run in parallel or in series using multiple generating means.

Liquid injection for generating cavitation may take place in a vessel open to the atmosphere, but preferably takes place within a pressure vessel to control the cavitation.

In cases where cavitation is generated by liquid injection, the solids content of the reaction solution is preferably 30 % by weight or less, more preferably 20 % by weight or less. This is because cavitation bubbles are more likely to uniformly act on the reaction mixture at such levels. On the other hand, the solids content of the aqueous suspension of slaked lime forming the reaction solution is preferably 0.1 % by weight or more to improve the reaction efficiency.

In cases where a complex of a cellulose fiber with calcium carbonate is synthesized in the present invention, for example, the pH of the reaction solution is basic at the start of the reaction, but changes to neutral as the carbonation reaction proceeds. Thus, the reaction can be controlled by monitoring the pH of the reaction solution.

In the present invention, stronger cavitation can be generated by increasing the jetting pressure of the liquid because the flow rate of the jetting liquid increases and accordingly the pressure decreases. Moreover, the impact force can be stronger by increasing the pressure in the reaction vessel because the pressure in the region where cavitation bubbles collapse increases and the pressure difference between the bubbles and the surroundings increases so that the bubbles vigorously collapse. This also helps to promote the dissolution and dispersion of carbonic acid gas introduced. The reaction temperature is preferably 0 °C or more and 90 °C or less, especially preferably 10 °C or more and 60 °C or less. Given that the impact force is generally thought to be maximal at the midpoint between the melting point and the boiling point, the temperature is suitably around 50 °C in cases of aqueous solutions, though significant effects can be obtained even at a lower temperature so far as it is within the ranges defined above because there is no influence of vapor pressure.

Ultrafine bubbles containing carbonic acid gas

In the preparation processes of the present invention, inorganic particles such as calcium carbonate or magnesium carbonate are synthesized in the presence of ultrafine bubbles (UFB, i.e., submicron bubbles having an average particle size of 1000 nm or less) containing carbonic acid gas. In the present invention, the ultrafine bubbles containing carbonic acid gas are generated by injecting a gas containing carbonic acid gas and a liquid into a reaction vessel, and the average particle size of the ultrafine bubbles is not specifically limited so far as it is 1000 nm or less, preferably 1 to 800 nm, more preferably 10 to 500 nm, or may be 50 to 300 nm. In the present invention, cavitation bubbles need not be generated by injecting a liquid under high pressure so that inorganic particles such as calcium carbonate can be synthesized without high energy consumption.

Further, the ultrafine bubbles containing carbonic acid gas can preferably stay in the system for 10 seconds or more, more preferably 60 seconds or more until the ultrafine bubbles disappear after the ultrafine bubbles are generated. Especially, the ultrafine bubbles according to the present invention can stay in the system still more preferably for 5 minutes or more, especially preferably 15 minutes or more, or may stay for 60 minutes or more. If the ultrafine bubbles can stay in the system over a long period of time, the bubbles containing carbonic acid gas can stay in the reaction solution over a long period of time so that inorganic carbonate microparticles can be prepared efficiently.

The ultrafine bubbles can be generated by known preparation processes. For example, they can be prepared by using a shear force induced by gas-liquid mixing, or by using a static mixer, or by using a venturi tube, or by using cavitation, or by using vapor condensation, or by using ultrasound, or by using a swirling jet, or by using dissolution under pressure, or by using micropores or the like. Among them, the use of a shear force induced by gas-liquid mixing and the use of a swirling jet are preferred because ultrafine bubbles can be easily generated by using a pump or the like. In preferred embodiments, carbon dioxide can be supplied through an intake port by natural intake (self-priming).

The term "cavitation" refers to a physical phenomenon in which bubbles are generated and disappear in the flow of a fluid in a short time due to a pressure difference. The bubbles generated by cavitation (cavitation bubbles) develop from very small "bubble nuclei" of 100 $\mu$m or less present in a liquid when the pressure drops below the saturated vapor pressure in the fluid only for a very short period of time. Cavitation bubbles can be generated in a reaction vessel by known methods, but conventional methods required high energy so that they were far from efficient. For example, it is possible to generate cavitation bubbles by injecting a fluid under high pressure, or by stirring at high speed in a fluid, or by causing an explosion in a fluid, or by using an ultrasonic vibrator (vibratory cavitation) or the like.

In the present invention, the reaction solution of raw materials or the like can be directly used as a jet liquid to generate ultrafine bubbles, or some fluid can be injected into the reaction vessel to generate ultrafine bubbles. The fluid forming a liquid jet may be any of a liquid, a gas, or a solid such as powder or pulp or a mixture thereof so far as it is in a flowing state. Moreover, another fluid such as carbonic acid gas can be added as an additional fluid to the fluid described above, if desired. The fluid described above and the additional fluid may be injected as a homogeneous mixture or may be injected separately.

The term "liquid jet" refers to a jet of a liquid or a fluid containing solid particles or a gas dispersed or mixed in a liquid, such as a liquid jet containing a pulp or a slurry of inorganic particles or bubbles. In the present invention, it may entrain bubbles containing carbonic acid gas.

The ultrafine bubbles can be generated by using a known device, and when bubbles are generated by emitting a jetting liquid through a nozzle or an orifice tube, for example, the pressure at the site where it is emitted from the nozzle into the reaction vessel (PI, herein also referred to as upstream pressure) is not specifically limited, but preferably 0.05 to 4.5 MPa, for example. In another embodiment, the pressure P1 can be 5 MPa or more and 10 MPa or less. If the upstream pressure is less than 0.01 MPa, little benefit is obtained because a pressure difference is less likely to occur from the pressure at the outlet of the reaction vessel (P2, herein also referred to as downstream pressure). If the upstream pressure is higher than 30 MPa, a special pump and pressure vessel are required and energy consumption increases, leading to cost disadvantages. On the other hand, the pressure at the outlet of the reaction vessel (P2) is preferably 0.005 MPa or more and 0.9 MPa or less expressed in static pressure. Further, the ratio between the pressure in the vessel and the pressure of the jetting liquid (P2/P1) is preferably in the range of 0.001 to 0.5. It should be noted that the pressure (dynamic pressure) can be measured by using a pressure gauge.

The flow rate at which a gas containing carbonic acid gas and a liquid are emitted from the nozzle is preferably 100 to 640 L/min.cm$^2$, or may be 100 to 300 L/min.cm$^2$. The jet flow rate of the jetting liquid is desirably in the range of 1 m/sec or more and 200 m/sec or less, preferably in the range of 20 m/sec or more and 100 m/sec or less. If the jet flow rate is less than 1 m/sec, little benefit is obtained because the pressure drop is too small to generate ultrafine bubbles. If it is greater than 200 m/sec, however, special equipment is required to generate high pressure, leading to cost disadvantages.

In the present invention, bubbles may be generated in a reaction vessel where a reaction occurs by the carbonation process. The process can be run in one-pass mode, or can be run through a necessary number of cycles. Further, the process can be run in parallel or in series using multiple generating means.

Liquid emission may take place in a vessel open to the atmosphere, but preferably takes place within a closed pressure vessel.

In cases where ultrafine bubbles are generated by liquid emission, the solids content of the aqueous suspension of slaked lime forming the reaction solution is preferably 30 % by weight or less, more preferably 20 % by weight or less. This is because bubbles are more likely to uniformly act on the reaction mixture at such levels. Further, the solids content of the aqueous suspension of slaked lime forming the reaction solution is preferably 0.1 % by weight or more to improve the reaction efficiency.

In the present invention, the pH of the reaction solution is basic at the start of the reaction, but changes to neutral as the carbonation reaction proceeds. Thus, the reaction can be controlled by monitoring the pH of the reaction solution.

In the present invention, the reaction temperature is preferably 0 °C or more and 90 °C or less, especially preferably 10 °C or more and 60 °C or less. Given that the impact force is generally thought to be maximal at the midpoint between the melting point and the boiling point, the temperature is suitably around 50 °C in cases of aqueous solutions, though significant benefits can be obtained even at a lower temperature so far as it is within the ranges defined above because there is no influence of vapor pressure.

In the present invention, the energy required to generate ultrafine bubbles can be reduced by adding a surfactant. Surfactants that may be used include known or novel surfactants, e.g., nonionic surfactants, anionic surfactants, cationic surfactants and amphoteric surfactants such as fatty acid salts, higher alkyl sulfates, alkylbenzene sulfonates, higher alcohols, alkyl phenols, alkylene oxide adducts of fatty acids and the like. These may be used as a one-component system or a mixture of two or more components. They may be added in any amount necessary for lowering the surface tension of the jetting liquid and/or target liquid.

In the present invention, the reaction can be controlled by the conductivity of the reaction solution or the reaction period, and specifically it can be controlled by adjusting the period during which the reactants stay in the reaction vessel. In the present invention, the reaction can also be controlled by stirring the reaction solution in the reaction vessel or performing the reaction as a multistage reaction.

The complex fibers of the present invention can be modified by known methods. In one embodiment, for example, they can be hydrophobized on their surface to enhance the miscibility with resins or the like.

In the present invention, water is used for preparing suspensions or for other purposes, in which case not only common tap water, industrial water, groundwater, well water and the like can be used, but also ion-exchanged water, distilled water, ultrapure water, industrial waste water, and the water obtained during the separation/dehydration of the reaction solution can conveniently be used.

Further in the present invention, the reaction solution in the reaction vessel can be used in circulation. Thus, the reaction efficiency increases and a desired complex of a fiber with inorganic particles can be readily obtained by circulating the reaction solution to promote stirring of the reaction solution.

(Inorganic particles)

In the present invention, the inorganic particles to be complexed with a fiber are not specifically limited, but preferably insoluble or slightly soluble in water. The inorganic particles are preferably insoluble or slightly soluble in water because the inorganic particles are sometimes synthesized in an aqueous system or the resulting fiber complexes are sometimes used in an aqueous system.

As used herein, the term "inorganic particles" refers to a compound of a metal element or a non-metal element. Further, the compound of a metal element refers to the so-called inorganic salt formed by an ionic bond between a metal cation (e.g., $Na^+$, $Ca^{2+}$, $Mg^{2+}$, $Al^{3+}$, $Ba^{2+}$ or the like) and an anion (e.g., $O^{2-}$, $OH^-$, $CO_3^{2-}$, $PO_4^{3-}$, $SO_4^{2-}$, $NO_3^-$, $Si_2O_3^{2-}$, $SiO_3^{2-}$, $Cl^-$, $F^-$, $S^{2-}$ or the like). The compound of a non-metal element includes, for example, silica ($SiO_2$) or the like. Preferably in the present invention, the inorganic particles at least partially comprise a metal salt of calcium, magnesium or barium, or the inorganic particles at least partially comprise a silicate, or a metal salt of aluminum, or metal particles containing titanium, copper, silver, iron, manganese, cerium or zinc.

These inorganic particles can be synthesized by a known method, which may be either a gas-liquid or liquid-liquid method. An example of gas-liquid methods is the carbonation process, according to which magnesium carbonate can be synthesized by reacting magnesium hydroxide and carbonic acid gas, for example. Examples of liquid-liquid methods include the reaction between an acid (e.g., hydrochloric acid, sulfuric acid or the like) and a base (e.g., sodium hydroxide, potassium hydroxide or the like) by neutralization; the reaction between an inorganic salt and an acid or a base; and the reaction between inorganic salts. For example, barium sulfate can be obtained by reacting barium hydroxide and sulfuric acid, or aluminum hydroxide can be obtained by reacting aluminum sulfate and sodium hydroxide, or composite inorganic particles of calcium and aluminum can be obtained by reacting calcium carbonate and aluminum sulfate. Such syntheses of inorganic particles can be performed in the presence of any metal or non-metal compound in the reaction solution, in which case the metal or non-metal compound is efficiently incorporated into the inorganic particles so that it can be complexed with them. For example, composite particles of calcium phosphate and titanium can be obtained by adding phosphoric acid to calcium carbonate to synthesize calcium phosphate in the presence of titanium dioxide in the reaction solution.

In one preferred embodiment, the average primary particle size of the inorganic particles in the complex fibers of the present invention can be, for example, 1.5 $\mu$m or less, or the average primary particle size can be 1200 nm or less, or 900 nm or less, or the average primary particle size can be even 200 nm or less, or 150 nm or less,. On the other hand, the average primary particle size of the inorganic particles can be 10 nm or more. It should be noted that the average primary particle size can be determined from electron micrographs.

(Calcium carbonate)

Calcium carbonate can be synthesized by, for example, the carbonation process, the soluble salt reaction process, the lime-soda process, the soda process or the like, and in preferred embodiments, calcium carbonate is synthesized by the carbonation process.

Typically, the preparation of calcium carbonate by the carbonation process involves using lime as a calcium source to synthesize calcium carbonate via a slaking step in which water is added to quick lime CaO to give slaked lime $Ca(OH)_2$ and a carbonation step in which carbonic acid gas CO2 is injected into the slaked lime to give calcium carbonate $CaCO_3$. During then, the suspension of slaked lime prepared by adding water to quick lime may be passed through a screen to remove less soluble lime particles contained in the suspension. Alternatively, slaked lime may be used directly as a calcium source. In cases where calcium carbonate is synthesized by the carbonation process in the present invention, the carbonation reaction can also be performed in the presence of cavitation bubbles.

In the synthesis of calcium carbonate, the nucleation reaction proceeds more readily when the concentrations of the raw materials (Ca ions, $CO_3$ ions) in the reaction solution are higher and the temperature is higher, but nuclei are less likely to adhere to cellulose fibers and free inorganic particles are more likely to be synthesized in the suspension under such conditions when complex fibers are prepared. Thus, the nucleation reaction must be suitably controlled if one desires to prepare a complex fiber in which calcium carbonate has been strongly bound. Specifically, this can be accomplished by optimizing the concentration of Ca ions and the pulp consistency and reducing the feed rate of CO2 per unit time. For example, the concentration of Ca ions in the reaction vessel is preferably 0.01 mol/L or more and less than 0.40 mol/L. If it is less than 0.01 mol/L, the reaction does not proceed readily, but if it is 0.40 mol/L or more, free inorganic particles are more likely to be synthesized in the suspension. The pulp consistency is preferably 0.5 % or more and less than 4.0 %. If it is less than 0.5 %, the reaction does not proceed readily because the raw materials collide with fibers less frequently, but if it is 4.0 % or more, homogeneous complexes cannot be obtained due to insufficient stirring. The feed rate of CO2 per unit time is determined in balance with the concentration of Ca ions in the reaction solution, and it is desirably selected so that the ratio between the concentration of Ca ions in the reaction solution (M; mol/L) and the feed rate of carbonate ions per minute per liter of the reaction solution (mol/min.L) is 5:1 or more. This is because if the feed rate of carbonate ions exceeds 5:1, the nucleation proceeds more readily and free inorganic particles are more likely to be synthesized in the suspension.

(Magnesium carbonate)

Magnesium carbonate can be synthesized by a known method. For example, basic magnesium carbonate can be synthesized via normal magnesium carbonate from magnesium bicarbonate, which is synthesized from magnesium hydroxide and carbonic acid gas. Magnesium carbonate can be obtained in various forms such as magnesium bicarbonate, normal magnesium carbonate, basic magnesium carbonate and the like depending on the synthesis method, among which basic magnesium carbonate is especially preferred as magnesium carbonate forming part of the fiber complexes of the present invention. This is because magnesium bicarbonate is relatively unstable, while normal magnesium carbonate consists of columnar (needle-like) crystals that may be less likely to adhere to fibers. However, a fiber complex of a fiber with magnesium carbonate in which the surface of the fiber is covered in a fish scale-like pattern can be obtained by allowing the chemical reaction to proceed in the presence of the fiber until basic magnesium carbonate is formed.

Further in the present invention, the reaction solution in the reaction vessel can be used in circulation. Thus, the reaction efficiency increases and desired inorganic particles can be readily obtained by circulating the reaction solution to increase contacts between the reaction solution and carbonic acid gas.

In the present invention, a gas such as carbon dioxide (carbonic acid gas) is injected into the reaction vessel where it can be mixed with the reaction solution. According to the present invention, the reaction can be performed with good efficiency because carbonic acid gas can be supplied to the reaction solution without using any gas feeder such as a fan, blower or the like and the carbonic acid gas is finely dispersed by cavitation bubbles.

In the present invention, the concentration of carbon dioxide in the gas containing carbon dioxide is not specifically limited, but the concentration of carbon dioxide is preferably higher. Further, the amount of carbonic acid gas introduced into the injector is not limited and can be selected as appropriate.

The gas containing carbon dioxide of the present invention may be substantially pure carbon dioxide gas or a mixture with another gas. For example, a gas containing an inert gas such as air or nitrogen in addition to carbon dioxide gas can be used as the gas containing carbon dioxide. Gases containing carbon dioxide other than carbon dioxide gas (carbonic acid gas) that can conveniently be used include exhaust gases discharged from incinerators, coal-fired boilers, heavy oil-fired boilers and the like in papermaking factories. Alternatively, the carbonation reaction can also be performed using carbon dioxide emitted from the lime calcination process.

In the synthesis of magnesium carbonate, the nucleation reaction proceeds more readily when the concentrations of the raw materials (Mg ions, $CO_3$ ions) in the reaction solution are higher and the temperature is higher, but nuclei are less likely to adhere to cellulose fibers and free inorganic particles are more likely to be synthesized in the suspension under such conditions when complex fibers are prepared. Thus, the nucleation reaction must be suitably controlled if one desires to prepare a complex fiber in which magnesium carbonate has been strongly bound. Specifically, this can be accomplished by optimizing the concentration of Mg ions and the pulp consistency and reducing the feed rate of CO2 per unit time. For example, the concentration of Mg ions in the reaction vessel is preferably 0.0001 mol/L or more and less than 0.50 mol/L. If it is less than 0.0001 mol/L, the reaction does not proceed readily, but if it is 0.50 mol/L or more, free inorganic particles are more likely to be synthesized in the suspension. The pulp consistency is preferably 0.5 % or more and less than 4.0 %. If it is less than 0.5 %, the reaction does not proceed readily because the raw materials collide with fibers less frequently, but if it is 4.0 % or more, homogeneous complexes cannot be obtained due to insufficient stirring. The feed rate of CO2 per unit time is determined in balance with the concentration of Mg ions in the reaction solution, and it is desirably selected so that the ratio between the concentration of Mg ions in the reaction solution (M; mol/L) and the feed rate of carbonate ions per minute per liter of the reaction solution (mol/min.L) is 20:1 or more. This is because if the feed rate of carbonate ions exceeds 20:1, the nucleation proceeds more readily and free inorganic particles are more likely to be synthesized in the suspension.

(Barium sulfate)

Barium sulfate is a crystalline ionic compound represented by the formula $BaSO_4$ and composed of barium ions and sulfate ions, and often assumes a plate-like or columnar form and is poorly soluble in water. Pure barium sulfate occurs as colorless crystals, but turns yellowish brown or black gray and translucent when it contains impurities such as iron, manganese, strontium, calcium or the like. It occurs as a natural mineral or can be synthesized by chemical reaction. Especially, synthetic products obtained by chemical reaction are not only used for medical purposes (as radiocontrast agents) but also widely used for paints, plastics, storage batteries and the like by taking advantage of their chemical stability.

In the present invention, complexes of a fiber with barium sulfate can be prepared by synthesizing barium sulfate in a solution in the presence of the fiber. For example, possible methods include the reaction between an acid (e.g., sulfuric acid or the like) and a base by neutralization; the reaction between an inorganic salt and an acid or a base; and the reaction between inorganic salts. For example, barium sulfate can be obtained by reacting barium hydroxide and sulfuric acid or aluminum sulfate, or barium sulfate can be precipitated by adding barium chloride into an aqueous solution containing a sulfate.

In the synthesis of barium sulfate, the nucleation reaction proceeds more readily when the concentrations of the raw materials (Ba ions, $SO_4$ ions) in the solution are higher and the temperature is higher, but nuclei are less likely to adhere to cellulose fibers and free inorganic particles are more likely to be synthesized in the suspension under such conditions when complex fibers are prepared. Thus, the nucleation reaction must be suitably controlled if one desires to prepare a complex fiber in which barium sulfate has been strongly bound. Specifically, this can be accomplished by optimizing the concentration of Ba ions and the pulp consistency and reducing the feed rate of SO4 ions per unit time. For example, the concentration of Ba ions in the reaction vessel is preferably 0.01 mol/L or more and less than 0.20 mol/L. If it is less than 0.01 mol/L, the reaction does not proceed readily, but if it is 0.20 mol/L or more, free inorganic particles are more likely to be synthesized in the suspension. The pulp consistency is preferably 0.5 % or more and less than 4.0 %. If it is less than 0.5 %, the reaction does not proceed readily because the raw materials collide with fibers less frequently, but if it is 4.0 % or more, homogeneous complexes cannot be obtained due to insufficient stirring. The feed rate of SO4 ions per unit time is determined in balance with the concentration of Ba ions in the reaction solution, and it is desirably selected so that the ratio between the concentration of Ba ions in the reaction solution (M; mol/L) and the feed rate of SO4 ions per minute per liter of the reaction solution (mol/min.L) is 50:1 or more. This is because if the feed rate of carbonate ions exceeds 50:1, the nucleation proceeds more readily and free inorganic particles are more likely to be synthesized in the suspension.

(Hydrotalcite)

Hydrotalcite can be synthesized by a known method. For example, hydrotalcite is synthesized via a co-precipitation reaction at controlled temperature, pH and the like by immersing a fiber in an aqueous carbonate solution containing carbonate ions forming interlayers and an alkaline solution (sodium hydroxide or the like) in a reaction vessel, and then adding an acid solution (an aqueous metal salt solution containing divalent metal ions and trivalent metal ions forming host layers). Alternatively, hydrotalcite can also be synthesized via a co-precipitation reaction at controlled temperature, pH and the like by immersing a fiber in an acid solution (an aqueous metal salt solution containing divalent metal ions and trivalent metal ions forming host layers) in a reaction vessel, and then adding dropwise an aqueous carbonate solution containing carbonate ions forming interlayers and an alkaline solution (sodium hydroxide or the like). The reaction typically takes place at ordinary pressure, though a process involving a hydrothermal reaction using an autoclave or the like has also been proposed (JPA 1985-6619).

In the present invention, chlorides, sulfides, nitrates and sulfates of magnesium, zinc, barium, calcium, iron, copper, cobalt, nickel, and manganese can be used as sources of divalent metal ions forming host layers. On the other hand, chlorides, sulfides, nitrates and sulfates of aluminum, iron, chromium and gallium can be used as sources of trivalent metal ions forming host layers.

In the present invention, carbonate ions, nitrate ions, chloride ions, sulfate ions, phosphate ions and the like can be used as interlayer anions. When carbonate ions are used as interlayer anions, sodium carbonate is used as a source of them. However, sodium carbonate can be replaced by a gas containing carbon dioxide (carbonic acid gas) such as substantially pure carbon dioxide gas or a mixture with another gas. For example, gases containing carbon dioxide that can conveniently be used include exhaust gases discharged from incinerators, coal-fired boilers, heavy oil-fired boilers and the like in papermaking factories. Alternatively, the carbonation reaction can also be performed using carbon dioxide emitted from the lime calcination process.

In the synthesis of hydrotalcite, the nucleation reaction proceeds more readily when the concentrations of the raw materials (metal ions forming host layers, $CO_3$ ions and the like) in the solution are higher and the temperature is higher, but nuclei are less likely to adhere to cellulose fibers and free inorganic particles are more likely to be synthesized in the suspension under such conditions when complex fibers are prepared. Thus, the nucleation reaction must be suitably controlled if one desires to prepare a complex fiber in which hydrotalcite has been strongly bound. Specifically, this can be accomplished by optimizing the concentration of CO3 ions and the pulp consistency and reducing the feed rate of metal ions per unit time. For example, the concentration of CO3 ions in the reaction vessel is preferably 0.01 mol/L or more and less than 0.80 mol/L. If it is less than 0.01 mol/L, the reaction does not proceed readily, but if it is 0.80 mol/L or more, free inorganic particles are more likely to be synthesized in the suspension. The pulp consistency is preferably 0.5 % or more and less than 4.0 %. If it is less than 0.5 %, the reaction does not proceed readily because the raw materials collide with fibers less frequently, but if it is 4.0 % or more, homogeneous complexes cannot be obtained due to insufficient stirring. The feed rate of metal ions (cations) per unit time is determined in balance with the concentration of anions in the reaction solution, and it is desirably selected so that the ratio between the total concentrations of $CO_3$ ions and OH ions in the reaction solution (M; mol/L) and the total feed rates of Mg ions and Al ions per minute per liter of the reaction solution (mol/min.L) is 320:1 or more when CO3 ions and OH ions are supplied with Mg ions and Al ions, for example, though it depends on the types of metals. This is because if the feed rate of carbonate ions exceeds 320:1, the nucleation proceeds more readily and free inorganic particles are more likely to be synthesized in the suspension.

(Titanium oxide)

Titanium oxide complex fibers can be prepared by synthesizing an inorganic binder in a solid form in a slurry containing a fiber and titanium oxide.

When an inorganic binder is synthesized in a slurry containing a fiber and titanium oxide, the inorganic binder in a solid form adheres to the fiber and titanium oxide adheres to the inorganic binder, whereby a complex fiber comprising the three components complexed together can be produced. By using this complex fiber, a titanium oxide complex fiber comprising titanium oxide efficiently adhered in the fiber can be obtained.

In cases where the inorganic binder is hydrotalcite, for example, a complex fiber comprising hydrotalcite and titanium oxide and a fiber can be prepared by synthesizing hydrotalcite in a solution containing the fiber and titanium oxide. For example, a fiber is first immersed and suspended in an aqueous carbonate solution containing carbonate ions forming interlayers and an aqueous alkaline solution (sodium hydroxide or the like) to form a slurry in a reaction vessel. Next, titanium oxide is added and dispersed in the resulting alkaline slurry. Then, an acid solution (an aqueous metal salt solution containing divalent metal ions and trivalent metal ions forming host layers) is added to the alkaline slurry containing titanium oxide to synthesize hydrotalcite via a co-precipitation reaction at controlled temperature, pH and the like. Thus, titanium oxide dispersed in the slurry is incorporated into or adhered to hydrotalcite when hydrotalcite is formed on the surface of the fiber. As a result, titanium oxide present in the slurry can be efficiently and uniformly bound to the fiber at a high proportion.

The slurry obtained by immersing and suspending the fiber is preferably adjusted to a pH range of 11 to 14, more preferably 12 to 13. If the pH of the slurry falls within this range, titanium oxide added in the next step can be uniformly dispersed in the slurry.

Further, chlorides, sulfides, nitrates and sulfates of magnesium, zinc, barium, calcium, iron, copper, silver, cobalt, nickel, and manganese can be used as sources of divalent metal ions forming host layers. On the other hand, chlorides, sulfides, nitrates and sulfates of aluminum, iron, chromium and gallium can be used as sources of trivalent metal ions forming host layers.

In cases where the inorganic binder is another metal compound, for example, a complex fiber comprising the metal compound and titanium oxide and a fiber can be prepared in the same manner by synthesizing the metal compound in a solution containing the fiber and titanium oxide. The metal compound can be synthesized by a known method, which is not specifically limited and may be either a gas-liquid or liquid-liquid method. An example of gas-liquid methods is the carbonation process, according to which magnesium carbonate can be synthesized by reacting magnesium hydroxide and carbonic acid gas, for example. Alternatively, calcium carbonate can be synthesized by the carbonation process comprising reacting calcium hydroxide and carbonic acid gas. Calcium carbonate may also be synthesized by the soluble salt reaction process, the lime-soda process, the soda process or the like, for example. Examples of liquid-liquid methods include the reaction between an acid (e.g., hydrochloric acid, sulfuric acid or the like) and a base (e.g., sodium hydroxide, potassium hydroxide or the like) by neutralization; the reaction between an inorganic salt and an acid or a base; and the reaction between inorganic salts. For example, barium sulfate can be obtained by reacting barium hydroxide and sulfuric acid. Aluminum hydroxide can be obtained by reacting aluminum chloride or aluminum sulfate and sodium hydroxide. Further, a composite inorganic binder of calcium and aluminum can be obtained by reacting calcium carbonate and aluminum sulfate.

Such syntheses of the inorganic binder can be performed in the presence of any further metal or metal compound other than titanium oxide in the reaction solution, in which case the metal or metal compound is also efficiently incorporated into the inorganic binder so that it can be complexed with it.

In cases where two or more inorganic binders are to be complexed with a fiber, a synthesis reaction of one inorganic binder may be performed in the presence of the fiber and titanium oxide and then stopped and followed by a synthesis reaction of another inorganic binder, or two or more inorganic binders may be synthesized at the same time if individual reactions do not interfere with each other or if the desired inorganic binders are synthesized by one reaction.

As seen from the above, the synthesis of an inorganic binder is crucial in the preparation process of a complex of a fiber with titanium oxide. Thus, a complex fiber in which titanium oxide and hydrotalcite have been strongly bound can be obtained by synthesizing hydrotalcite under the suitable conditions described above for hydrotalcite (temperature, consistency, and the feed rate of various ions) in cases where hydrotalcite is used as the inorganic binder, for example.

(Alumina/silica)

Alumina and/or silica can be synthesized by a known method. When any one or more of an inorganic acid or an aluminum salt is used as a starting material of the reaction, the synthesis is accomplished by adding an alkali silicate. The synthesis can also be accomplished by using an alkali silicate as a starting material and adding any one or more of an inorganic acid or an aluminum salt, but the product adheres better to the fiber when an inorganic acid and/or aluminum salt is used as a starting material. Inorganic acids that can be used include, but not specifically limited to, sulfuric acid, hydrochloric acid, nitric acid or the like, for example. Among them, sulfuric acid is especially preferred in terms of cost and handling. Aluminum salts include aluminum sulfate, aluminum chloride, aluminum polychloride, alum, potassium alum and the like, among which aluminum sulfate can conveniently be used. Alkali silicates include sodium silicate or potassium silicate or the like, among which sodium silicate is preferred because of easy availability. The molar ratio between silicate and alkali is not limited, but commercial products having an approximate molar ratio of $SiO_2 : Na_2O$ = 3 to 3.4:1 commonly distributed as sodium silicate J3 can conveniently be used.

In the present invention, complex fibers comprising silica and/or alumina deposited on the surface of a fiber are prepared preferably by synthesizing silica and/or alumina on the fiber while maintaining the pH of the reaction solution containing the fiber at 4.6 or less. The reason why this results in complex fibers covered well on the fiber surface is not known in complete detail, but it is believed that complex fibers with high coverage ratio and adhesion ratio can be obtained because trivalent aluminum ions are formed at a high degree of ionization by maintaining a low pH.

In the synthesis of silica and/or alumina, the nucleation reaction proceeds more readily when the concentrations of the raw materials (silicate ions, aluminum ions) in the reaction solution are higher and the temperature is higher, but nuclei are less likely to adhere to cellulose fibers and free inorganic particles are more likely to be synthesized in the suspension under such conditions when complex fibers are prepared. Thus, the nucleation reaction must be suitably controlled if one desires to prepare a complex fiber in which silica and/or alumina have/has been strongly bound. Specifically, this can be accomplished by optimizing the pulp consistency and reducing the feed rate of silicate ions and aluminum ions added per unit time. For example, the pulp consistency is preferably 0.5 % or more and less than 4.0 %. If it is less than 0.5 %, the reaction does not proceed readily because the raw materials collide with fibers less frequently, but if it is 4.0 % or more, homogeneous complexes cannot be obtained due to insufficient stirring. The feed rate of silicate ions and aluminum ions added per unit time is preferably 1:1 provided that excessive Al ions must be added in advance to maintain the pH at 4.6 or less. This is because if silicate ions are added at an excessive rate to raise the pH above 4.6, inorganic particles composed of silica and/or alumina are less likely to adhere to the pulp surface and free inorganic particles are more likely to be synthesized in the suspension.

(Fibers)

The complex fibers used in the present invention comprise a cellulose fiber complexed with inorganic particles. Examples of cellulose fibers forming part of the complexes that can be used include, without limitation, not only natural cellulose fibers but also regenerated fibers (semisynthetic fibers) such as rayon and lyocell and synthetic fibers and the like. Examples of raw materials of cellulose fibers include pulp fibers (wood pulps and non-wood pulps), cellulose nanofibers, bacterial celluloses, animal-derived celluloses such as Ascidiacea, algae, etc., among which wood pulps may be prepared by pulping wood raw materials. Examples of wood raw materials include softwoods such as Pinus densiflora, Pinus thunbergii, Abies sachalinensis, Picea jezoensis, Pinus koraiensis, Larix kaempferi, Abies firma, Tsuga sieboldii, Cryptomeria japonica, Chamaecyparis obtusa, Larix kaempferi, Abies veitchii, Picea jezoensis var. hondoensis, Thujopsis dolabrata, Douglas fir (Pseudotsuga menziesii), hemlock (Conium maculatum), white fir (Abies concolor), spruces, balsam fir (Abies balsamea), cedars, pines, Pinus merkusii, Pinus radiata, and mixed materials thereof; and hardwoods such as Fagus crenata, birches, Alnus japonica, oaks, Machilus thunbergii, Castanopsis, Betula platyphylla, Populus nigra var. italica, poplars, Fraxinus, Populus maximowiczii, Eucalyptus, mangroves, Meranti, Acacia and mixed materials thereof.

The technique for pulping the wood raw materials (woody raw materials) is not specifically limited, and examples include pulping processes commonly used in the papermaking industry. Wood pulps can be classified by the pulping process and include, for example, chemical pulps obtained by digestion via the kraft process, sulfite process, soda process, polysulfide process or the like; mechanical pulps obtained by pulping with a mechanical force such as a refiner, grinder or the like; semichemical pulps obtained by pulping with a mechanical force after a chemical pretreatment; waste paper pulps; deinked pulps and the like. The wood pulps may have been unbleached (before bleaching) or bleached (after bleaching).

Examples of non-wood pulps include cotton, hemp, sisal (Agave sisalana), abaca (Musa textilis), flax, straw, bamboo, bagas, kenaf, sugar cane, corn, rice straw, Broussonetia kazinoki $\times$ B. papyrifera, Edgeworthia chrysantha and the like.

The pulp fibers may be unbeaten or beaten depending on the desired properties of complex sheets to be formed therefrom, but they are preferably beaten. This can be expected to improve the sheet strength and to promote the adhesion of inorganic particles.

Moreover, these cellulosic raw materials can be further treated, whereby they can also be used as powdered celluloses, chemically modified celluloses such as oxidized celluloses, and fine celluloses such as cellulose nanofibers (CNF, TEMPO-oxidized CNF, phosphate esters of CNF, carboxymethylated CNF, mechanically ground CNF and the like), and microfibrillated cellulose (MFC).

Powdered celluloses used in the present invention may be, for example, rod-like crystalline cellulose powders having a defined particle size distribution prepared by purifying/drying and grinding/sieving the undecomposed residue obtained after acid hydrolysis of an accepted pulp fraction, or may be commercially available as KC FLOCK (from Nippon Paper Industries Co., Ltd.), CEOLUS (from Asahi Kasei Chemicals Corp.), AVICEL (from FMC Corporation) and the like. The degree of polymerization of celluloses in the powdered celluloses is preferably in the order of 100 to 1500, and the powdered celluloses preferably have a crystallinity of 70 to 90 % as determined by X-ray diffraction and also preferably have a volume average particle size of 1 $\mu$m or more and 100 $\mu$m or less as determined by a laser diffraction particle size distribution analyzer. Oxidized celluloses used in the present invention can be obtained by oxidation with an oxidizing agent in water in the presence of an N-oxyl compound and a compound selected from the group consisting of a bromide, an iodide or a mixture thereof, for example.

The term "fine cellulose" refers to a fiber obtained by disintegrating a cellulosic raw material such as pulp. In the present invention, the average fiber diameter refers to the length weighted average fiber diameter, and the average fiber length refers to the length weighted average fiber length, and these can be determined by, for example, a fractionator from Valmet K.K. or the like.

Fine celluloses include cellulose nanofibers (hereinafter also referred to as "CNF") having an average fiber diameter of less than 500 nm, and microfibrillated cellulose fibers (hereinafter also referred to as "MFC").

(1) CNF/MFC

CNF/MFC are a single microfibril of a cellulose preferably having an average fiber diameter of 2 nm or more and 100 nm or less, more preferably 2 nm or more and 30 nm or less. Preferably, they have an average fiber length of 1 $\mu$m or more and 5 $\mu$m or less. In the present invention, it is preferable to use CNF/MFC exhibiting a Brookfield viscosity (60 rpm, 20 °C) of 100 mPa.s or more and 10000 mPa.s or less when they are dispersed in water at a concentration of 1 % (w/v) (i.e., an aqueous dispersion containing 1 g of CNF/MFC (dry weight) in 100 mL of water). The average fiber diameter and average fiber length of CNF can also be determined by using an atomic force microscope (AFM) or a transmission electron microscope (TEM).

The Brookfield viscosity of an aqueous dispersion of CNF/MFC can be determined by a known method. For example, it can be measured using the viscometer available as VISCOMETER TV-10 from TOKI SANGYO CO., LTD. During the measurement, the temperature is 20 °C, and the number of revolutions of the rotor is 60 rpm. Considering that an aqueous dispersion of CNF/MFC is typically thixotropic and therefore characterized by its viscosity, which decreases under shear stress by agitation and increases under static conditions to form a gel, the Brookfield viscosity is preferably measured under sufficient agitation.

CNF/MFC preferably have an average aspect ratio of 10 or more, more preferably 30 or more. The upper limit is not specifically limited, but preferably 1000 or less, more preferably 100 or less, still more preferably 80 or less. The average aspect ratio can be calculated by the equation below:

$$\text{Average aspect ratio} = \text{Average fiber length} / \text{Average fiber diameter}.$$

Preferably, CNF/MFC are mechanically disintegrated and chemically modified CNF/MFC obtained by chemically modifying and then mechanically disintegrating a pulp. As described above, CNF/MFC have been disintegrated to a different extent from that of cellulosic raw materials. Generally, it is not easy to quantify the extent of disintegration, but it was found in the present invention that the extent of disintegration can be quantified by the variation in freeness or water retention before and after mechanical disintegration of CNF/MFC. Preferably, the mechanically disintegrated and chemically modified cellulose fibers of the present invention are obtained by mechanically disintegrating or beating a chemically modified pulp to the extent that the freeness of the pulp decreases by 10 ml or more as compared with before disintegration (F0). Thus, the difference in freeness $\Delta F = F0 - F$ wherein F is the freeness after treatment is preferably 10 ml or more, more preferably 20 ml or more, still more preferably 30 ml or more. The freeness of the chemically modified pulp depends on the extent of modification, but the extent of disintegration can be determined according to the definition above based on the freeness of the chemically modified pulp used as a raw material irrespective of the extent of chemical modification. Preferably, the freeness after treatment F is greater than 0 ml, though it is difficult to uniquely define the upper limit of $\Delta F$ because F0 depends on the extent of modification of the chemically modified pulp, as described above. Strong mechanical disintegration is required to obtain CNF/MFC having F of 0 ml, and therefore, the resulting MFC may have an average fiber diameter of less than 500 nm (cellulose nanofibers). Further, the drainage of the pulp slurry to be made into paper may be impaired if a lot of CNF/MFC having a freeness of 0 ml is added to a papermaking process. The degree of fibrillation of MFC is preferably 3.5 % or more, more preferably 4 % or more as determined by a fractionator from Valmet K.K.

(2) The amount added

The amount of the fine celluloses added is adjusted to provide a desired amount in relation to the raw material pulp in the finished paper. The amount in relation to the raw material pulp is preferably 20 % by weight or less, more preferably 10 % by weight or less, still more preferably 5 % by weight or less. If the amount added exceeds the upper limit, the water retention is so high that the drainage during papermaking may be impaired and the economic efficiency decreases. The lower limit of the amount of the fine celluloses added is adjusted as described above, though it is not specifically limited so far as the benefits of the present invention are obtained. The lower limit of the amount in relation to the raw material pulp is preferably about 1 ppm by weight or more, more preferably 3 ppm by weight or more.

(3) Preparation of the fine celluloses

(3-1) Cellulosic raw materials

The fine celluloses can be prepared by disintegrating or beating a cellulosic raw material after it has been chemically modified, if desired. Cellulosic raw materials include those derived from, but not specifically limited to, plants, animals (e.g., Ascidiacea), algae, microorganisms (e.g., acetic acid bacteria (*Acetobacter*)), microbial products, for example. Plant-derived materials include, for example, wood, bamboo, hemp, jute, kenaf, farm wastes, cloth, pulp (unbleached softwood kraft pulp (NUKP), bleached softwood kraft pulp (NBKP), unbleached hardwood kraft pulp (LUKP), bleached hardwood kraft pulp (LBKP), unbleached softwood sulfite pulp (NUSP), bleached softwood sulfite pulp (NBSP), thermomechanical pulp (TMP), recycled pulp, waste paper and the like). Cellulosic raw materials used in the present invention may be any one or a combination of them, but preferred are cellulose fibers derived from plants or microorganisms, and more preferred are cellulose fibers derived from plants.

(3-2) Chemical modification

Chemical modification refers to introducing a functional group into a cellulosic raw material, preferably introducing an anionic group in the present invention. Anionic groups include acidic groups such as carboxyl groups, carboxyl-containing groups, phosphate groups, phosphate-containing groups and the like. Carboxyl-containing groups include -COOH, -R-COOH (wherein R represents an alkylene group containing 1 or more and 3 or less carbon atoms), -O-R-COOH (wherein R represents an alkylene group containing 1 or more and 3 or less carbon atoms). Phosphate-containing groups include polyphosphate groups, phosphite groups, phosphonate groups, polyphosphonate groups and the like. These acidic groups are sometimes introduced in the form of a salt (e.g., carboxylate (-COOM, wherein M represents a metal atom)) depending on the reaction conditions. In the present invention, the chemical modification is preferably oxidation or etherification.

Oxidation can be performed as known in the art. For example, a method comprises oxidizing a cellulosic raw material using an oxidizing agent in water in the presence of an N-oxyl compound and a compound selected from the group consisting of a bromide, an iodide and a mixture thereof. According to this method, the primary hydroxyl group at the C6 position of the glucopyranose ring on the surface of the cellulose is selectively oxidized to give a group selected from the group consisting of aldehyde, carboxyl and carboxylate groups. Alternatively, the ozone oxidation process may also be used. According to this oxidation reaction, at least the hydroxyl groups at the C2 and C6 positions of the glucopyranose ring forming the cellulose is oxidized and the cellulose chain is cleaved at the same time.

An example of a method for determining the carboxyl group content is as follows: 60 ml of a 0.5 % by weight slurry (aqueous dispersion) of an oxidized cellulose is prepared and adjusted to pH 2.5 by adding a 0.1M aqueous hydrochloric acid solution, and then a 0.05N aqueous sodium hydroxide solution is added dropwise while measuring the electric conductivity until the pH reaches 11. The carboxyl group content can be calculated by the equation below from the amount of sodium hydroxide (a) consumed during the weak acid neutralization stage where the electric conductivity changes slowly.

$$\text{Carboxyl group content [mmol/g oxidized cellulose]} = a \text{ [ml]} \times 0.05 \text{ / the weight [g] of oxidized cellulose.}$$

The amount of carboxyl groups in an oxidized cellulose determined in this way is preferably 0.1 mmol/g or more, more preferably 0.5 mmol/g or more, still more preferably 0.8 mmol/g or more based on the bone dry weight. The upper limit of the amount is preferably 3.0 mmol/g or less, more preferably 2.5 mmol/g or less, still more preferably 2.0 mmol/g or less. Thus, the amount is preferably 0.1 mmol/g or more and 3.0 mmol/g or less, more preferably 0.5 mmol/g or more and 2.5 mmol/g or less, still more preferably 0.8 mmol/g or more and 2.0 mmol/g or less.

Etherifications include carboxymethylation (to form carboxymethyl ethers), methylation (to form methyl ethers), ethylation (to form ethyl ethers), cyanoethylation (to form cyanoethyl ethers), hydroxyethylation (to form hydroxyethyl ethers), hydroxypropylation (to form hydroxypropyl ethers), ethylhydroxyethylation (to form ethylhydroxyethyl ethers), hydroxypropylmethylation (to form hydroxypropylmethyl ethers) and the like. Among them, carboxymethylation is preferred. Carboxymethylation can be performed by etherifying a starting cellulosic raw material after it has been mercerized, for example.

The degree of carboxymethyl substitution per glucose unit in a carboxymethylated cellulose can be determined by the following method, for example. 1) Place precisely weighed about 2.0 g of a carboxymethylated cellulose fiber (bone dry basis) into a 300-mL Erlenmeyer flask equipped with a ground glass stopper. 2) Add 100 mL of a solution prepared by adding 100 mL of special grade concentrated nitric acid to 1000 mL of nitric acid in methanol, and shake the mixture for 3 hours to convert the carboxymethyl cellulose salt (carboxymethylated cellulose) into a hydrogen-substituted carboxymethylated cellulose. 3) Place precisely weighed about 1.5 g or more and 2.0 g or less of the hydrogen-substituted carboxymethylated cellulose (bone dry basis) into a 300-mL Erlenmeyer flask equipped with a ground glass stopper. 4) Wet the hydrogen-substituted carboxymethylated cellulose with 15 mL of 80 % methanol, and add 100 mL of 0.1N NaOH, and shake the mixture at room temperature for 3 hours. 5) Using phenolphthalein as an indicator, back-titrate the excess of NaOH with 0.1N $H_2SO_4$. 6) Calculate the degree of carboxymethyl substitution (DS) by the equation

below:

$$A = [(100 \times F' - (0.1N\ H_2SO_4)\ (mL) \times F) \times 0.1] / (\text{the bone dry weight (g) of hydrogen-substituted carboxymethylated cellulose})$$

$$DS = 0.162 \times A / (1 - 0.058 \times A)$$

A: the amount of 1N NaOH (mL) required to neutralize 1 g of hydrogen-substituted carboxymethyl cellulose
F': factor of 0.1N $H_2SO_4$
F: factor of 0.1N NaOH.

The degree of carboxymethyl substitution per anhydrous glucose unit in a carboxymethylated cellulose is preferably 0.01 or more, more preferably 0.05 or more, still more preferably 0.10 or more. The upper limit of the degree of substitution is preferably 0.50 or less, more preferably 0.40 or less, still more preferably 0.35 or less. Thus, the degree of carboxymethyl substitution is preferably 0.01 or more and 0.50 or less, more preferably 0.05 or more and 0.40 or less, still more preferably 0.10 or more and 0.30 or less.

(3-3) Disintegration or beating

The fine celluloses can be prepared by mechanically disintegrating or beating a cellulose, and the chemically modified fine celluloses can be prepared by mechanically disintegrating or beating a chemically modified cellulose. Disintegration or beating may be performed once, or either one or a combination of them may be performed multiple times. In cases where they are performed multiple times, each disintegration or beating may take place at any time and the machine used may be the same or different.
Machines that can be used for disintegration or beating are not specifically limited but include, for example, high speed rotary machines, colloid mill machines, high pressure machines, roll mill machines, ultrasonic machines and the like, specifically machines in which a metal or blade rotates about the axis of rotation to act on pulp fibers such as high pressure or ultra-high pressure homogenizers, refiners, beaters, PFI mills, kneaders, dispersers and the like, or machines in which friction occurs between pulp fibers.
The fibers shown above may be used alone or as a mixture of two or more of them. For example, fibrous materials collected from waste water of a papermaking factory may be supplied to the carbonation reaction of the present invention. Various composite particles including those of various shapes such as fibrous particles can be synthesized by supplying such materials to the reaction vessel
In the present invention, materials that are incorporated into the product inorganic particles to form composite particles can be used in addition to a fiber. In the present invention, composite particles incorporating inorganic particles, organic particles, polymers or the like can be prepared by synthesizing inorganic particles in a solution containing these materials in addition to a fiber such as a pulp fiber.
The fiber length of the fiber to be complexed is not specifically limited, but the average fiber length can be, for example, in the order of 0.1 $\mu$m to 15 mm, or may be 10 $\mu$m to 12 mm, 50 $\mu$m to 10 mm, 200 $\mu$m to 8 mm or the like. Especially in the present invention, the average fiber length is preferably greater than 50 $\mu$m because of easy dehydration or sheet-forming. Still more preferably, the average fiber length is greater than 200 $\mu$m because dehydration and sheet-forming can be accomplished by using the mesh of a dewatering and/or papermaking wire (filter) used in typical papermaking processes.
The fiber diameter of the fiber to be complexed is not specifically limited, but the average fiber diameter can be, for example, in the order of 1 nm to 100 $\mu$m, or may be 10 nm to 100 $\mu$m, 0.15 $\mu$m to 100 $\mu$m, 1 $\mu$m to 90 $\mu$m, 3 to 50 $\mu$m, 5 to 30 $\mu$m or the like. Especially in the present invention, the average fiber diameter is preferably greater than 500 nm because of easy dehydration and sheet-forming. Still more preferably, the average fiber diameter is greater than 1 $\mu$m because dehydration and sheet-forming can be accomplished by using the mesh of a dewatering and/or papermaking wire (filter) used in typical papermaking processes.

EXAMPLES

The present invention will be further illustrated with reference to specific experimental examples, but the present invention is not limited to the specific examples described below. Unless otherwise specified, the concentrations, parts and the like as used herein are based on weight, and the numerical ranges are described to include their endpoints.

Experiment 1. Synthesis of complex fibers

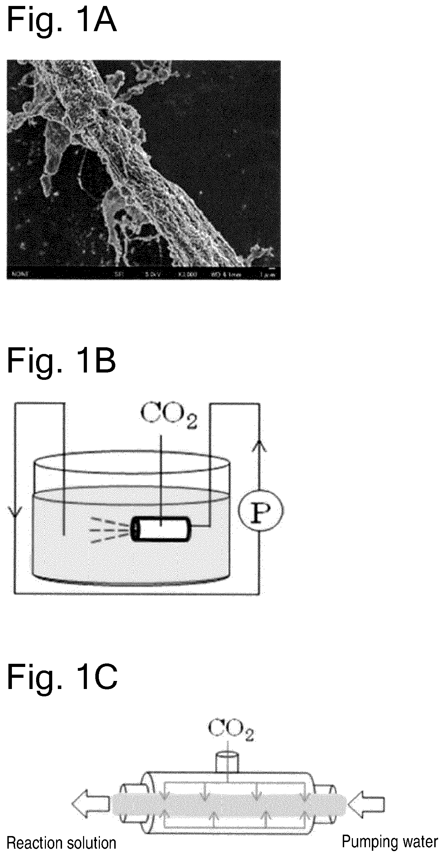

(Sample A, Fig. 1A)

Using a reaction system as shown in Fig. 1B charged with 2m$^3$ of a 1 % aqueous suspension of slaked lime (calcium hydroxide Ca (OH)2 from OKUTAMA KOGYO CO., LTD.), the reaction mixture was circulated at a pumping flow rate of 80 L/min through an ultrafine bubble generator (a shear type YJ-9 from ENVIRO VISION CO., LTD., Fig. 1C) (at a jet flow rate from the nozzle of 125 L/min.cm$^2$). A lot of ultrafine bubbles containing carbonic acid gas were generated in the reaction mixture by injecting carbonic acid gas through the intake port of the ultrafine bubble generator to synthesize calcium carbonate particles by the carbonation process. The reaction was performed for 365 minutes at a reaction temperature of 15 °C and a carbonic acid gas injection flow rate of 16 L/min, and when the pH of the reaction mixture reached 7.5 (from the pH of 12.8 before the reaction), the reaction was stopped and a sample was collected. The ultrafine bubbles had an average particle size of about 137 nm, and the average duration until the ultrafine bubbles disappeared after the ultrafine bubbles were generated (herein also referred to as "bubble lifetime") was 60 minutes or more.

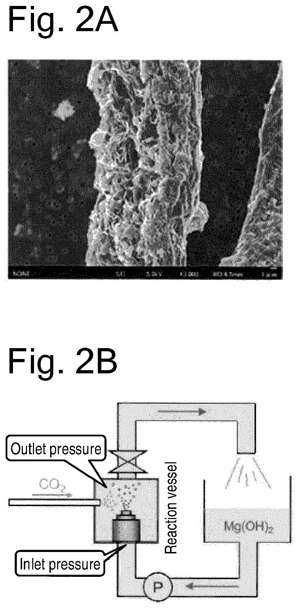

(Sample B, Fig. 2A)

An aqueous suspension containing 15000 g of magnesium hydroxide (from Ube Material Industries, Ltd.) and 15000 g of a kraft pulp (LBKP/NBKP = 8/2, CSF: 390 ml, average fiber length: 0.75 mm) was provided. A 1500-L cavitation system was charged with 1000 L of this aqueous suspension and carbonic acid gas was injected into the reaction vessel while circulating the reaction solution to synthesize a complex fiber of a fiber with magnesium carbonate microparticles by the carbonation process. The reaction temperature was about 45 °C, the carbonic acid gas source was a commercially available liquefied gas, and the injection flow rate of carbonic acid gas was 40 L/min. When the pH of the reaction mixture reached about 7.8 (from the pH of about 9.5 before the reaction), the injection of $CO_2$ was stopped, after which the generation of cavitation and the circulation of the slurry within the system were continued for 30 minutes to give a sample.
During the synthesis of the complex fiber, cavitation bubbles were generated in the reaction vessel by injecting the reaction solution into the reaction vessel while circulating it, as shown in Fig. 2B. Specifically, cavitation bubbles were generated by injecting the reaction solution through a nozzle (nozzle diameter: 1.5 mm) under high pressure at a jet flow rate of about 70 m/s, an inlet pressure (upstream pressure) of 7 MPa and an outlet pressure (downstream pressure) of 0.3 MPa.

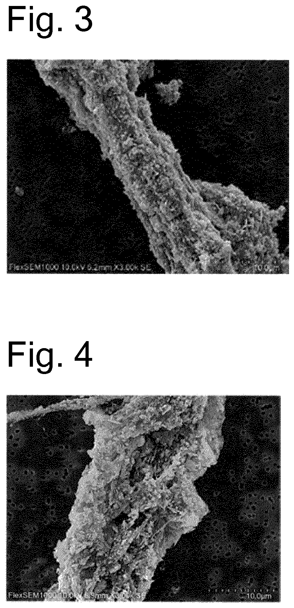

(Sample C, Fig. 3)

After 866 g of a 1 % pulp slurry (LBKP, CSF = 450 mL, average fiber length: about 0.7 mm) and 37.2 g of barium hydroxide octahydrate (from NIPPON CHEMICAL INDUSTRIAL CO., LTD.) were mixed using a Three-One Motor agitator (667 rpm), aluminum sulfate (alum, 49.1 g) was added dropwise at a rate of 0.7 g/min. After completion of the dropwise addition, stirring was continued for 30 minutes to give a sample.

(Sample D, Fig. 4)

After 533 g of a 1.7 % pulp slurry (LBKP, CSF = 450 mL, average fiber length: about 0.7 mm) and 12.4 g of barium hydroxide octahydrate (from NIPPON CHEMICAL INDUSTRIAL CO., LTD.) were mixed using a Three-One Motor agitator (667 rpm), aluminum sulfate (67.2 g of a 1:4 dilution of alum stock solution in water) was added dropwise at a rate of 1.1 g/min. After completion of the dropwise addition, stirring was continued for 30 minutes to give a sample.

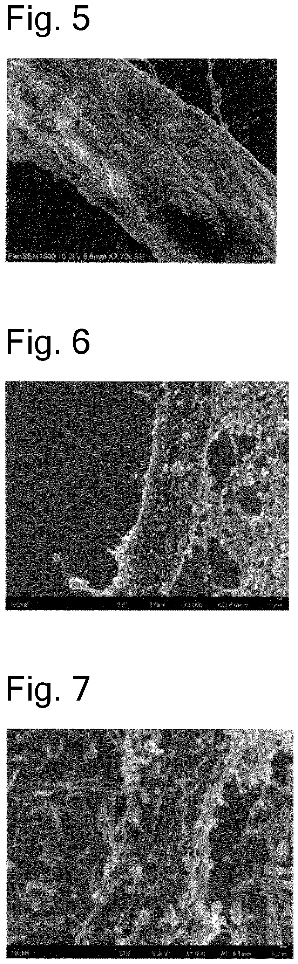

(Sample E, Fig. 5)

To synthesize hydrotalcite (HT) represented by $Mg_6Al_2(OH)_{16}CO_3.4H_2O$, an aqueous mixed solution of $Na_2CO_3$ (from Wako Pure Chemical Industries, Ltd.) and NaOH (from Wako Pure Chemical Industries, Ltd.) was prepared as an alkaline solution (solution A), and an aqueous mixed solution of $MgCl_2$ (from Wako Pure Chemical Industries, Ltd.) and $AlCl_3$ (from Wako Pure Chemical Industries, Ltd.) was prepared as an acid solution (solution B).

-    Alkaline solution (solution A, Na ion concentration 1.0 M);
-    Acid solution (solution B, Mg ion concentration 0.6 M).

A bleached softwood kraft pulp (NBKP, CSF = 410 mL) was used as the fiber to be complexed (average fiber length: 1.1 mm).

The pulp fiber was added to the alkaline solution to provide an aqueous suspension containing the pulp fiber (pulp fiber consistency: 2%, pH: about 12.4). A 1-L reaction vessel was charged with 750 mL of this aqueous suspension (containing 15 g of pulp solids), and the acid solution was added dropwise while stirring the aqueous suspension to synthesize a complex fiber of the fiber with hydrotalcite microparticles. The reaction temperature was 50 °C, and the average dropwise addition rate was 1.7 g/min, and when the pH of the reaction mixture reached about 7, the dropwise addition was stopped. After completion of the dropwise addition, the reaction mixture was stirred for 30 minutes, and washed with 10 volumes of water to remove the salt, thereby giving a sample.

(Sample F, Fig. 6)

An aqueous suspension in an amount of 30 L containing calcium hydroxide (300 g of slaked lime $Ca(OH)_2$ from Wako Pure Chemical Industries, Ltd.) and a bleached softwood kraft pulp (NBKP, Canadian Standard Freeness CSF: 215 mL, 300 g) was provided. A 40-L closed system was charged with this aqueous suspension and carbonic acid gas was injected into the reaction vessel to generate cavitation, whereby a complex fiber of a fiber with calcium carbonate microparticles was synthesized by the carbonation process to give Sample F. The reaction temperature was about 25 °C, the carbonic acid gas source was a commercially available liquefied gas, and the injection flow rate of carbonic acid gas was 40 L/min, and when the pH of the reaction mixture reached about 7 (from the pH of about 12.8 before the reaction), the reaction was stopped.

During the synthesis of the complex fiber, cavitation bubbles were generated in the reaction vessel by injecting the reaction solution into the reaction vessel while circulating it. Specifically, cavitation bubbles were generated by injecting the reaction solution through a nozzle (nozzle diameter: 1.5 mm) under high pressure at a jet flow rate of about 70 m/s, an inlet pressure (upstream pressure) of 7 MPa and an outlet pressure (downstream pressure) of 0.3 MPa.

(Sample G, Fig. 7)

An aqueous suspension containing 140 g of magnesium hydroxide (from Wako Pure Chemical Industries, Ltd.) and 140 g of a kraft pulp (LBKP/NBKP = 8/2, CSF: 390 ml, average fiber length: 0.75 mm) was provided. A 45-L cavitation system was charged with 14 L of this aqueous suspension and carbonic acid gas was injected into the reaction vessel while circulating the reaction solution to synthesize a complex fiber of a fiber with magnesium carbonate microparticles by the carbonation process. The reaction temperature was about 36 °C, the carbonic acid gas source was a commercially available liquefied gas, and the injection flow rate of carbonic acid gas was 4 L/min. When the pH of the reaction mixture reached about 7.8 (from the pH of about 9.5 before the reaction), the injection of the carbonic acid gas was stopped, after which the generation of cavitation and the circulation of the slurry within the system were continued for 30 minutes to give Sample G.

During the synthesis of the complex fiber, cavitation bubbles were generated in the reaction vessel by injecting the reaction solution into the reaction vessel while circulating it. Specifically, cavitation bubbles were generated by injecting the reaction solution through a nozzle (nozzle diameter: 1.5 mm) under high pressure at a jet flow rate of about 70 m/s, an inlet pressure (upstream pressure) of 7 MPa and an outlet pressure (downstream pressure) of 0.3 MPa.

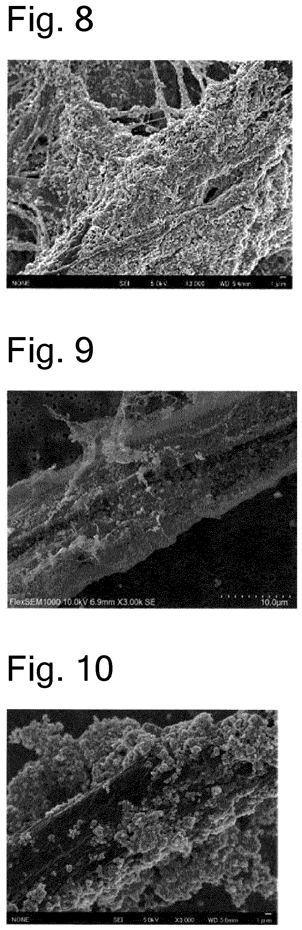

(Sample H, Fig. 8)

In a vessel (a machine chest having an internal volume of 4 $m^3$), a 2 % pulp slurry (LBKP/NBKP = 8/2, CSF = 390 mL, average fiber length: about 0.8 mm, solids content 25 kg) and barium hydroxide octahydrate (from NIPPON CHEMICAL INDUSTRIAL CO., LTD., 75 kg) were mixed, and then aluminum sulfate (alum, 98 kg) was added dropwise at a rate of about 5000 g/min using a peristaltic pump. After completion of the dropwise addition, stirring was continued for 30 minutes to give Sample H.

(Sample I, Fig. 9)

After 890 g of a 1.0 % pulp slurry (LBKP, CSF = 450 mL, average fiber length: about 0.7 mm) and 12.4 g of barium hydroxide octahydrate (from NIPPON CHEMICAL INDUSTRIAL CO., LTD.) were mixed using a Three-One Motor agitator (667 rpm), aluminum sulfate (alum, 17.3 g) was added dropwise at a rate of 0.8 g/min. After completion of the dropwise addition, stirring was continued for 30 minutes to give Sample I.

(Sample J, Fig. 10)

To synthesize hydrotalcite (HT) represented by $Mg_6Al_2(OH)_{16}CO_3 \cdot 4H_2O$, an aqueous mixed solution of $Na_2CO_3$ (from Wako Pure Chemical Industries, Ltd.) and NaOH (from Wako Pure Chemical Industries, Ltd.) was prepared as an alkaline solution (solution A), and an aqueous mixed solution of $MgCl_2$ (from Wako Pure Chemical Industries, Ltd.) and $AlCl_3$ (from Wako Pure Chemical Industries, Ltd.) was prepared as an acid solution (solution B).

- Alkaline solution (solution A, $Na_2CO_3$ concentration 0.02 M, NaOH concentration 0.4 M);
- Acid solution (solution B, $MgCl_2$ concentration 1.2 M, $AlCl_3$ concentration 0.4 M).

A pulp fiber (average fiber length: 0.8 mm) was used as the fiber to be complexed, which comprises a bleached hardwood kraft pulp (LBKP) and a bleached softwood kraft pulp (NBKP) in a weight ratio of 8:2 and which has been adjusted to a Canadian Standard Freeness of 390 ml using a single disc refiner (SDR).

The pulp fiber was added to the alkaline solution to provide an aqueous suspension containing the pulp fiber (pulp fiber consistency: 2%, pH: about 12.4). A 4-$m^3$ reaction vessel was charged with this aqueous suspension (2000 L containing 30 kg of pulp solids), and the acid solution was added dropwise while stirring the aqueous suspension to synthesize a complex fiber of the fiber with hydrotalcite microparticles. The reaction temperature was 60 °C, and the dropwise addition rate was 1700 g/min, and when the pH of the reaction mixture reached about 7, the dropwise addition was stopped. After completion of the dropwise addition, the reaction mixture was stirred for 30 minutes, and washed with 10 volumes of water to remove the salt, thereby giving Sample J.

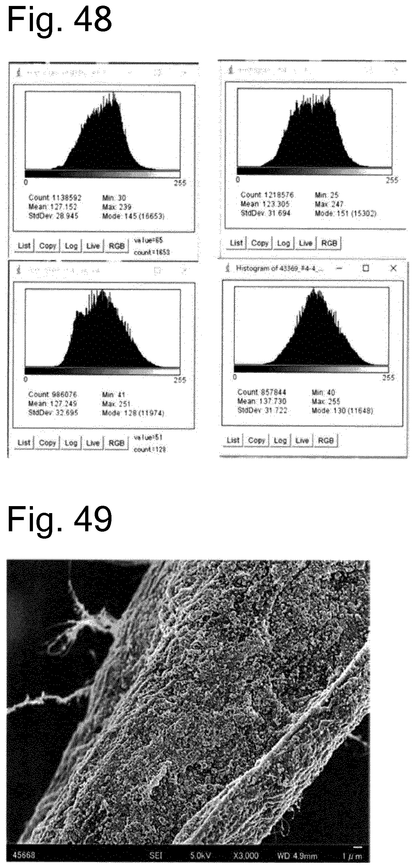

(Synthesis of a fiber complex: Sample K, Fig. 49)

To synthesize hydrotalcite (HT) represented by $Mg_6Al_2(OH)_6CO_3 \cdot 4H_2O$, an aqueous mixed solution of $Na_2CO_3$ (from Tokuyama Corporation) and NaOH (from Nippon Light Metal Company, Ltd.) was prepared as an alkaline solution (solution A), and an aqueous mixed solution of $MgSO_4$ (from Suzukawa Chemical Industrial Co., Ltd.) and $Al_2(SO_4)_3$ (from Asahi Chemical Co., Ltd.) was prepared as an acid solution (solution B).

- Alkaline solution (solution A, $Na_2CO_3$ concentration 0.02 M, NaOH concentration 0.3 M);
- Acid solution (solution B, $MgSO_4$ concentration 1.4 M, $Al_2(SO_4)_3$ concentration 0.25M).

A pulp fiber (average fiber length: 0.85 mm) was used as the fiber to be complexed, which comprises a bleached hardwood kraft pulp (LBKP) and a bleached softwood kraft pulp (NBKP) in a weight ratio of 8:2 and which has been adjusted to a Canadian Standard Freeness of 390 ml using a double disc refiner (SDR).

The pulp fiber was added to the alkaline solution to provide an aqueous suspension containing the pulp fiber (pulp fiber consistency: 3%, pH: about 12.5). A 15-$m^3$ reaction vessel was charged with this aqueous suspension (8000 L containing 300 kg of pulp solids), and 110 kg of titanium dioxide (from Sakai Chemical Industry Co., Ltd.) was added and then the acid solution was added dropwise while stirring the aqueous suspension to synthesize a complex fiber of the fiber with hydrotalcite microparticles. The reaction temperature was 50 °C, and the dropwise addition rate was 2880 g/min, and when the pH of the reaction mixture reached about 7, the dropwise addition was stopped. After completion of the dropwise addition, the reaction mixture was stirred for 30 minutes, and washed with 10 volumes of water to remove the salt, thereby giving Sample K. Sample K had an inorganic content of 38 % and a coverage ratio of 97 % as calculated by image analysis.

(Evaluation of the coverage ratio and inorganic content)

Each of the complex samples obtained was washed with ethanol, and then evaluated for the coverage ratio (the area ratio of the fiber surface covered by the inorganic material) by observation using an electron microscope. The results showed that the inorganic material covered the fiber surface and spontaneously adhered to it in each sample. The coverage ratio of each complex sample is shown in the table below, demonstrating that the coverage ratio was 15 % or more in each sample. The coverage ratio here was determined by binarizing the image taken with the electron microscope at a magnification of 3000X into areas occupied by the inorganic material (white) and areas occupied by the fiber (black) and calculating the proportion (area ratio in area %) of the white areas, i.e., the areas occupied by the inorganic material to the whole image. The coverage ratio was determined by using an image processing software (ImageJ, U.S. National Institutes of Health).

Further, the mass fraction (% by weight) of the inorganic material contained in each of the complexes obtained was also determined. The mass fraction here was determined as follows: each complex was heated at 525 °C for about 2 hours, after which the mass fraction was calculated on the basis of the ash content of the complex determined from the ratio between the weight of the remaining ash and the original solids content (JIS P 8251: 2003).

[Table 1-1]

| Complex fiber | Fiber | Inorganic particles | Inorganic content of the complex fiber (%) | Coverage ratio of the complex fiber (%) |
|---|---|---|---|---|
| Sample A | LBKP | Calcium carbonate | 53 | 97 |
| Sample B | LBKP: NBKP=8:2 | Magnesium carbonate | 50 | 100 |
| Sample C | LBKP | Barium sulfate | 75 | 85 |
| Sample D | LBKP | Barium sulfate | 50 | 90 |
| Sample E | NBKP | Hydrotalcite | 51 | 95 |
| Sample F | LBKP | Calcium carbonate | 55 | 55 |
| Sample G | LBKP: NBKP=8:2 | Magnesium carbonate | 52 | 98 |
| Sample H | LBKP | Barium sulfate | 75 | 97 |
| Sample I | LBKP | Barium sulfate | 50 | 90 |
| Sample J | NBKP | Hydrotalcite | 50 | 50 |
| Sample K | LBKP: NBKP=8:2 | Hydrotalcite | 38 | 97 |

[Table 1-2]

| Complex fiber | Synthesis conditions of the complex fiber | | | | | | |
|---|---|---|---|---|---|---|---|
| | Injection flow rate of carbonic acid gas (L/min) | Dropwise addition rate of precursors of inorganic particles (g/min) | Reaction time (min) | A: Feed rate of precursors of inorganic particles per L of the slurry before reaction (mol/min) | B: Ion concentration in the reaction mixture (M) | B/A | Temperature (°C) |
| Sample A | 16 | - | 365 | 0.0004 [CO2 ions] | 0.14] [Ca ions] | 379 | 15 |
| Sample B | 40 | - | 170 | 0.002 [CO2 ions] | 0.26 [Mg ions] | 144 | 45 |
| Sample C | - | 0.7 | 70 | 0.002 [SO4 ions] | 0.14 [Ba ions] | 72 | 22 |
| Sample D | - | 1.1 | 60 | 0.001 [SO4 ions] | 0.074 [Ba ions] | 61 | 25 |
| Sample E | - | 1.7 | 180 | 0.002 [Mg ions + Al ions] | 1.7 [CO3 ions + OH ions] | 938 | 50 |
| Sample F | 40 | - | 4 | [0.060] [CO2 ions] | 0.14 [Ca ions] | 2 | 25 |
| Sample G | 4 | - | 15 | 0.013 [CO2 ions] | 0.17 [Mg ions] | 13 | 36 |
| Sample H | - | 5000 | 70 | 0.009 [SO4 ions] | 0.19 [Ba ions] | 20 | 25 |
| Sample I | - | 0.8 | 20 | 0.002 [SO4 ions] | 0.44 [Ba ions] | 21 | 25 |
| Sample J | - | 1700 | 150 | 0.003 [Mg ions + Al ions] | 0.87 [CO3 ions + OH ions] | 319 | 60 |

(continued)

| Complex fiber | Synthesis conditions of the complex fiber | | | | | | |
|---|---|---|---|---|---|---|---|
| | Injection flow rate of carbonic acid gas (L/min) | Dropwise addition rate of precursors of inorganic particles (g/min) | Reaction time (min) | A: Feed rate of precursors of inorganic particles per L of the slurry before reaction (mol/min) | B: Ion concentration in the reaction mixture (M) | B/A | Temperature (°C) |
| Sample K | - | 2.9 | 180 | 0.0007 [Mg ions + Al ions] | 0.28 [CO3 ions + OH ions] | 415 | 50 |

Experiment 2. Preparation of fiber structure sheets

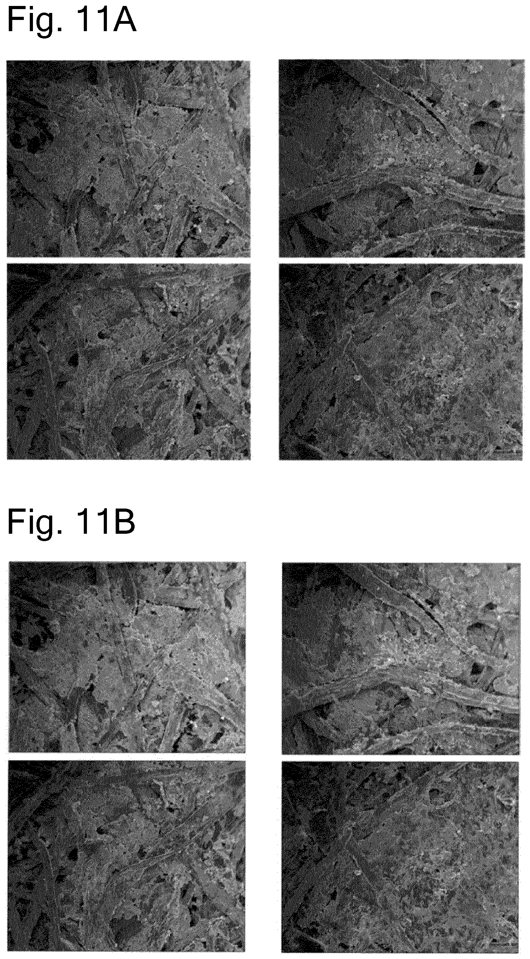

(Sheet 1, Fig. 11)

To a complex fiber obtained in Experiment 1 (Sample A) was added 100 ppm each on a solids basis of a cationic retention aid (having a molecular weight 15,000,000 and a charge density of +2.1 meq/g available as ND300 from HYMO CORPORATION) and an anionic retention aid (having a molecular weight 14,000,000 and a charge density of -1.8 meq/g available as FA230 from HYMO CORPORATION) to prepare a stock slurry. Then, a sheet was prepared from this stock slurry using a Fourdrinier machine under the conditions of a machine speed of 10 m/min.

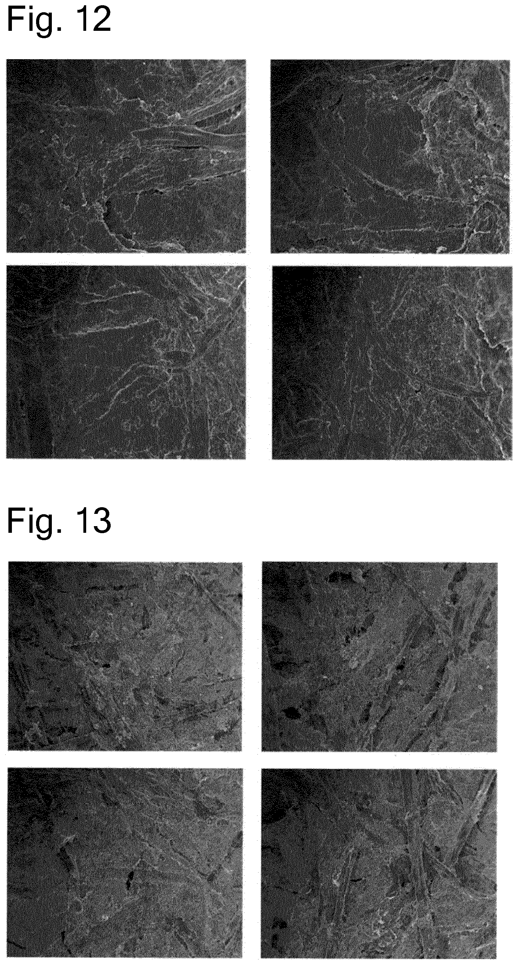

(Sheet 2, Fig. 12)

A sheet was prepared using a Fourdrinier machine in the same manner as described for Sheet 1 except that the complex fiber used was Sample B (a complex fiber of a fiber with Mg carbonate) and the basis weight was 330 g/m$^2$.

(Sheet 3, Fig. 13)

A complex fiber obtained in Experiment 1 described above (Sample C) was dispersed in tap water to prepare a slurry having a consistency of about 0.5 %. This slurry was combined with 100 ppm each on a solids basis of a cationic retention aid (having a molecular weight 15,000,000 and a charge density of +2.1 meq/g available as ND300 from HYMO CORPORATION) and an anionic retention aid (having a molecular weight 14,000,000 and a charge density of -1.8 meq/g available as FA230 from HYMO CORPORATION) and then prepared into a handsheet using a 150-mesh wire according to JIS P 8222: 2015.

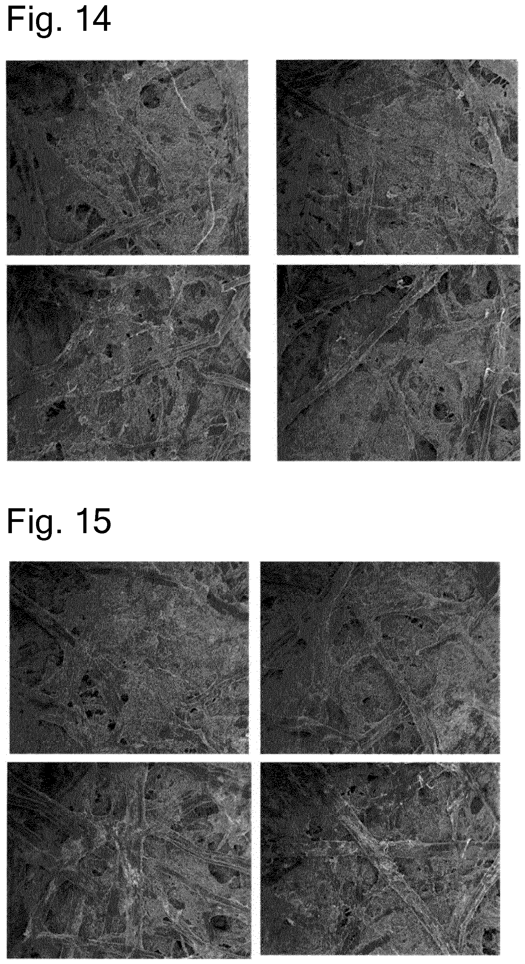

(Sheet 4, Fig. 14)

A handsheet was prepared in the same manner as described for Sheet 3 except that the complex fiber used was Sample D.

(Sheet 5, Fig. 15)

A handsheet was prepared in the same manner as described for Sheet 4 except that no retention aid was added.

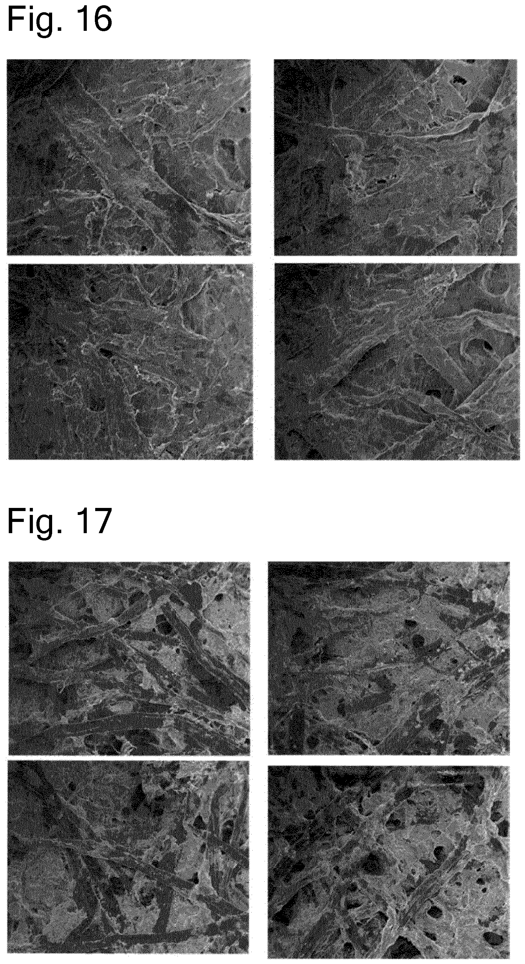

(Sheet 6, Fig. 16)

A handsheet was prepared in the same manner as described for Sheet 3 except that the complex fiber used was Sample E and the basis weight was 250 g/m$^2$.

(Sheet 7, Fig. 17)

A handsheet was prepared in the same manner as described for Sheet 3 except that the complex fiber used was Sample F (a complex fiber of a fiber with Ca carbonate).

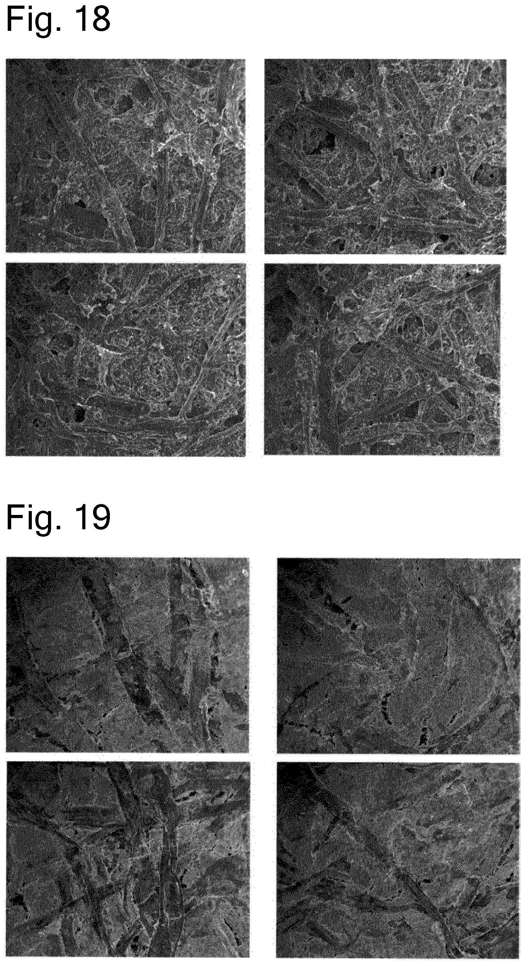

(Sheet 8, Fig. 18)

A handsheet was prepared in the same manner as described for Sheet 3 except that the complex fiber used was Sample G (a complex fiber of a fiber with Mg carbonate).

(Sheet 9, Fig. 19)

To Sample H was added 100 ppm each on a solids basis of a cationic retention aid (having a molecular weight 15,000,000 and a charge density of +2.1 meq/g available as ND300 from HYMO CORPORATION) and an anionic retention aid (having a molecular weight 14,000,000 and a charge density of -1.8 meq/g available as FA230 from HYMO CORPORATION) to prepare a stock slurry. Then, a sheet was prepared from this stock slurry using a Fourdrinier machine under the conditions of a machine speed of 10 m/min.

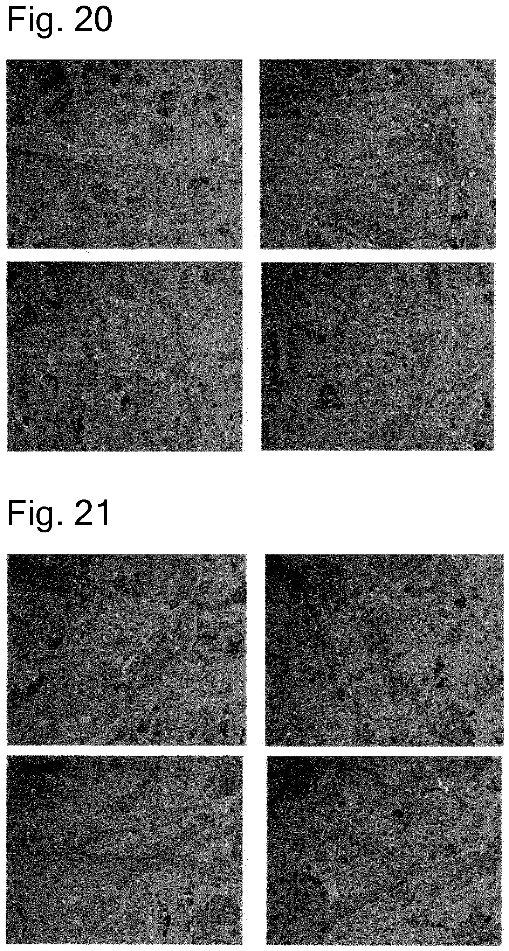

(Sheet 10, Fig. 20)

A handsheet was prepared in the same manner as described for Sheet 3 except that the complex fiber used was Sample I.

(Sheet 11, Fig. 21)

A handsheet was prepared in the same manner as described for Sheet 10 except that no retention aid was added.

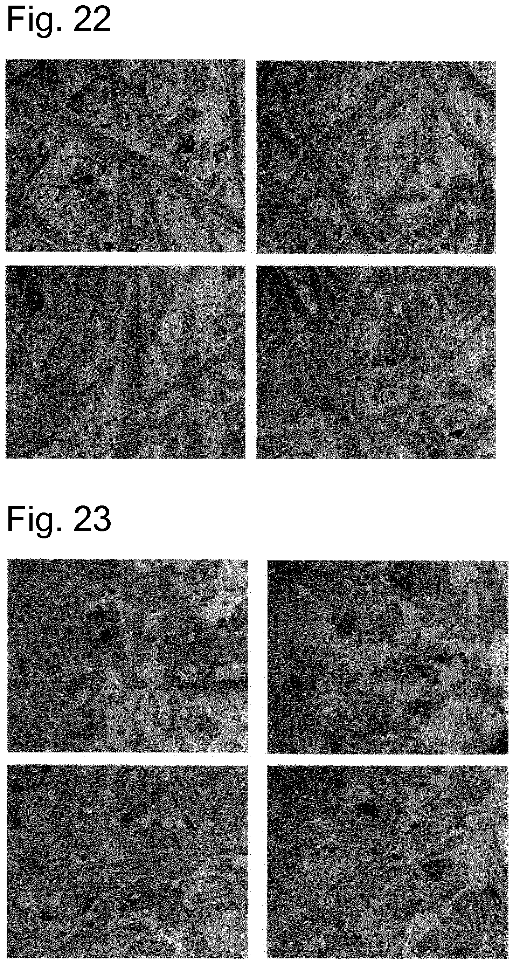

(Sheet 12, Fig. 22)

A handsheet was prepared in the same manner as described for Sheet 3 except that the complex fiber used was Sample J and the basis weight was 200 g/m$^2$.

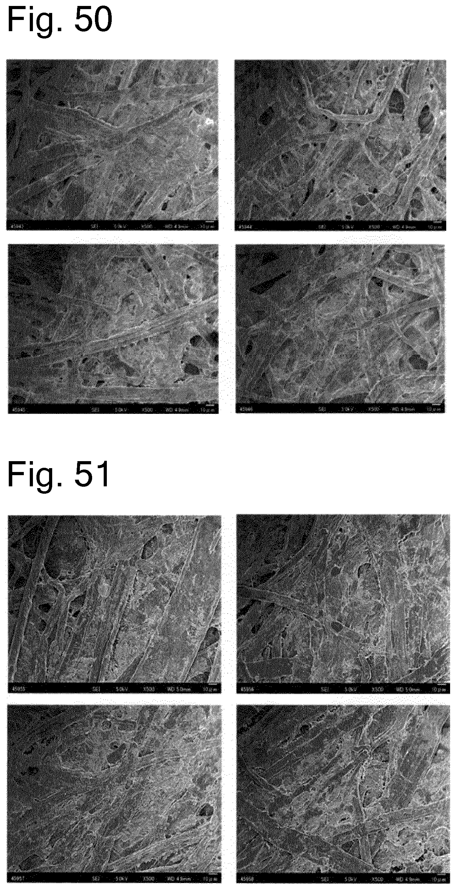

(Sheet 13, Fig. 50)

A sheet was prepared using a Fourdrinier machine in the same manner as described for Sheet 9 except that the complex fiber used was Sample K and 100 ppm of a cationic retention aid (having a molecular weight of 19,000,000 and a charge density of +1.7 meq/g) and 0.2 % of a wet strength additive (having a molecular weight of 4,000,000 and a charge density of +2.3 meq/g) were added.

(Sheet 14, Fig. 51)

A sheet was prepared using a Fourdrinier machine in the same manner as described for Sheet 13 except that 1 % of the wet strength additive was added.

(Sheet a, Fig. 23)

A bleached softwood kraft pulp (NBKP, Canadian Standard Freeness CSF: 215 mL) and precipitated calcium carbonate (average particle size: about 3.5 $\mu$m) were mixed in a weight ratio of 50 : 50 on a solids basis and dispersed in tap water to prepare a slurry having a consistency of about 0.5 %. This slurry was combined with 100 ppm each on a solids basis of a cationic retention aid (having a molecular weight 15,000,000 and a charge density of +2.1 meq/g available as ND300 from HYMO CORPORATION) and an anionic retention aid (having a molecular weight 14,000,000 and a charge density of -1.8 meq/g available as FA230 from HYMO CORPORATION) and then prepared into a handsheet having a basis weight of 60 g/m$^2$ using a 150-mesh wire according to JIS P 8222: 2015.

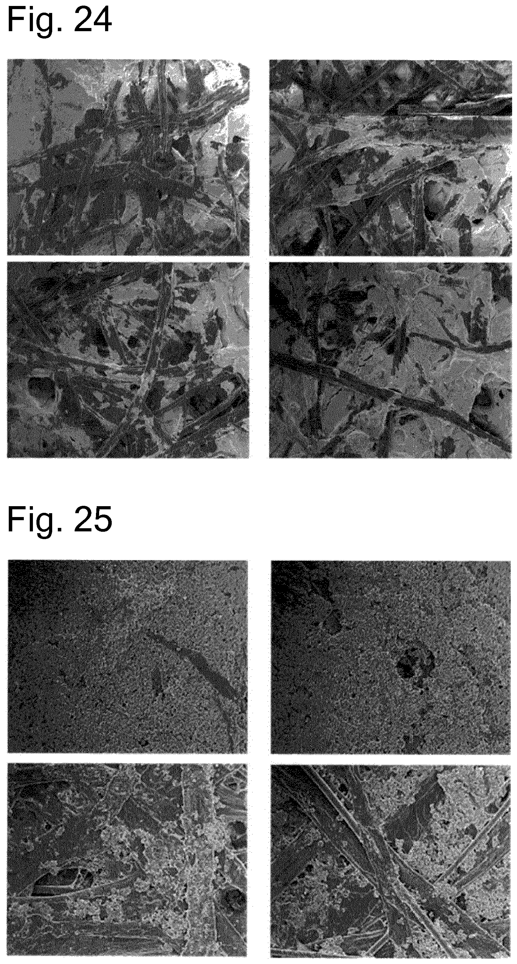

(Sheet b, Fig. 24)

A handsheet was prepared in the same manner as described for Sheet a except that precipitated calcium carbonate having a different average particle size (average particle size: about 80 nm) was used.

(Evaluation of the sheets)

Each of the sheets obtained was observed with a scanning electron microscope (JSM-6700F from JEOL Ltd.) to reveal that the surface and inside of the paper are closely covered/filled with the inorganic material. The sheets were also analyzed for their basis weight according to JIS P 8124: 2011 and their inorganic content according to JIS P 8251: 2003. Further, the retention and drainage time during sheet forming were determined. The retention was calculated as the percentage of the bone dry weight of each sheet obtained in relation to the bone dry weight of the input stock. The drainage time was determined as the length of time until no water film is observed on the wire after starting dehydration.

[Table 2]

| | Raw material used | Retention aid | Sheet-forming method | Retention after sheet-forming (%) | Drainage time during sheet-forming (sec) | Sheet properties | |
|---|---|---|---|---|---|---|---|
| | | | | | | Inorganic content (%) | Basis weight (g/m2) |
| Sheet 1 | Sample A (Complex fiber with calcium carbonate) | Yes | Machine | - | - | 45 | 65 |
| Sheet 2 | Sample B (Complex fiber with magnesium carbonate) | Yes | Machine | - | - | 47 | 330 |
| Sheet 3 | Sample C (Complex fiber with barium sulfate) | Yes | Hand making | 55 | 21 | 70 | 60 |
| Sheet 4 | Sample D (Complex fiber with barium sulfate) | Yes | Hand making | 95 | 15 | 45 | 60 |
| Sheet 5 | | No | Hand making | 85 | 10 | 40 | 60 |
| Sheet 6 | Sample E (Complex fiber with hydrotalcite) | Yes | Hand making | 85 | 30 | 45 | 250 |
| Sheet 7 | Sample F (Complex fiber with calcium carbonate) | Yes | Hand making | 80 | 35 | 45 | 60 |
| Sheet 8 | Sample G (Complex fiber with magnesium carbonate) | Yes | Hand making | 75 | 40 | 43 | 60 |
| Sheet 9 | Sample H (Complex fiber with barium sulfate) | Yes | Machine | - | - | 70 | 180 |
| Sheet 10 | Sample I (Complex fiber with barium sulfate) | Yes | Hand making | 70 | 25 | 42 | 55 |
| Sheet 11 | | No | Hand making | 60 | 21 | 37 | 55 |
| Sheet 12 | Sample J (Complex fiber with hydrotalcite) | Yes | Hand making | 65 | 180 | 35 | 200 |
| Sheet 13 | Sample K (Complex fiber with hydrotalcite) | Yes | Machine | - | - | 36 | 100 |
| Sheet 14 | | Yes | Machine | - | - | 33 | 100 |

(continued)

| | Raw material used | Retention aid | Sheet-forming method | Retention after sheet-forming (%) | Drainage time during sheet-forming (sec) | Sheet properties | |
|---|---|---|---|---|---|---|---|
| | | | | | | Inorganic content (%) | Basis weight (g/m2) |
| Sheet a (Paper containing Ca carbonate) | Mixture (Pulp and calcium carbonate) | Yes | Hand making | - | - | 50 | 60 |
| Sheet b (Paper containing Ca carbonate) | Mixture (Pulp and calcium carbonate) | Yes | Hand making | - | - | 50 | 60 |

Experiment 3. Image analysis of the fiber structure sheets

Two-dimensional images of the surface of the sheets obtained in Experiment 2 and the sheets shown below (Sheets c to e) were taken with a scanning electron microscope (Figs. 11 to 27, and Figs. 50 to 51).

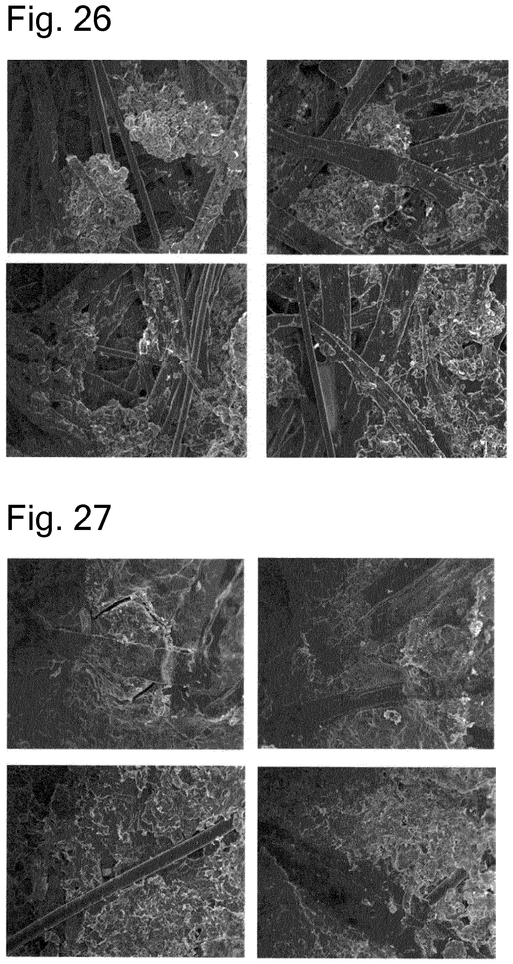

- Sheet c (Fig. 25): a sheet containing Al hydroxide (available under the brand name Ceraform from LINTEC Corporation)
- Sheet d (Fig. 26): a sheet containing Ca carbonate (available under the brand name Calcium Carbonate Paper from Nittetsu Mining Co., Ltd.)
- Sheet e (Fig. 27): a sheet containing Mg silicate (available under the brand name Tigerex from TIGEREX Co., Ltd.).

Specimens of 3 mm x 3 mm in dimensions were cut out from each sheet sample, and attached to a specimen mount made from brass using a double-sided adhesive tape so that the top side of one specimen and the bottom side of another specimen faced upward, respectively. After the specimens were attached, they were pressed down by fingers to level out any irregularities on the surface of the sheet. The specimens were subjected to a conductive coating treatment by coating them with osmium using an osmium coater at a thickness setting of 20 nm. A scanning electron microscope (JSM-6700F from JEOL Ltd.) was used to perform observation in secondary electron imaging (SEI) mode. Two randomized sites on each of the top side and the bottom side were observed at a magnification of 500X. The observed images were imported into a computer after the contrast was appropriately adjusted using the Auto Contrast function.

Next, the images observed with the scanning electron microscope were denoised by the average filter using an image analysis software (ImageJ) (image dimensions: 190 $\mu$m x 250 $\mu$m). Specifically, noise was removed by selecting the "Process" tab, next "Noise" and then "Despeckle" (median filter). With this median filter, each pixel is replaced by the median of its neighboring 3 x 3 pixels (the fifth value), whereby areas having an extremely high or low contrast (luminance) (noises) are removed. Fig. 11B shows electron micrograph images of Sheet 1 after denoising.

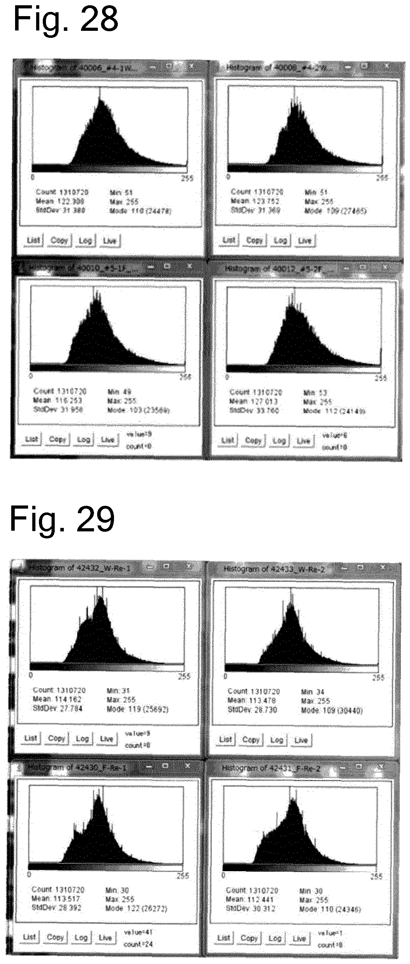

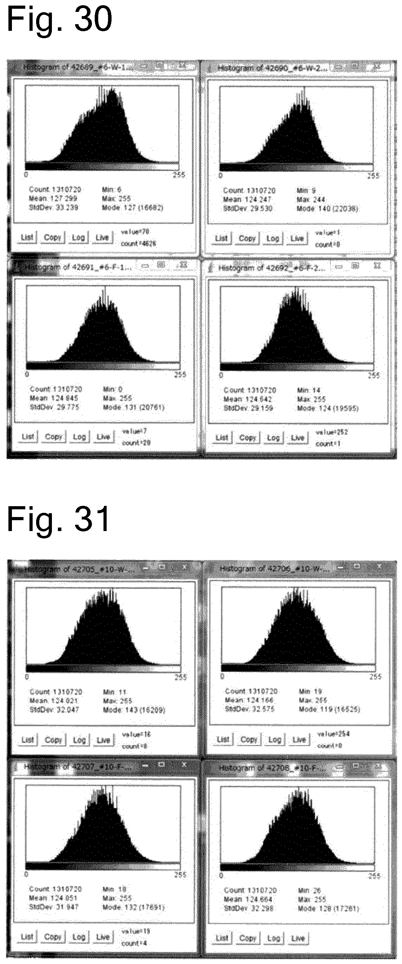

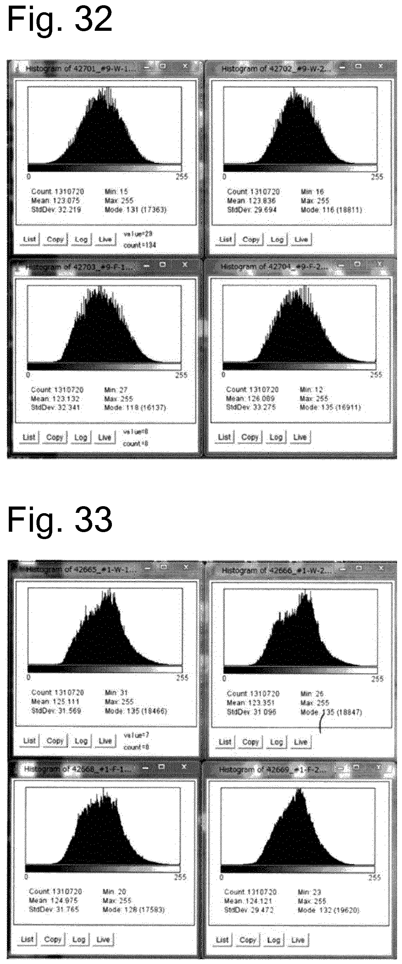

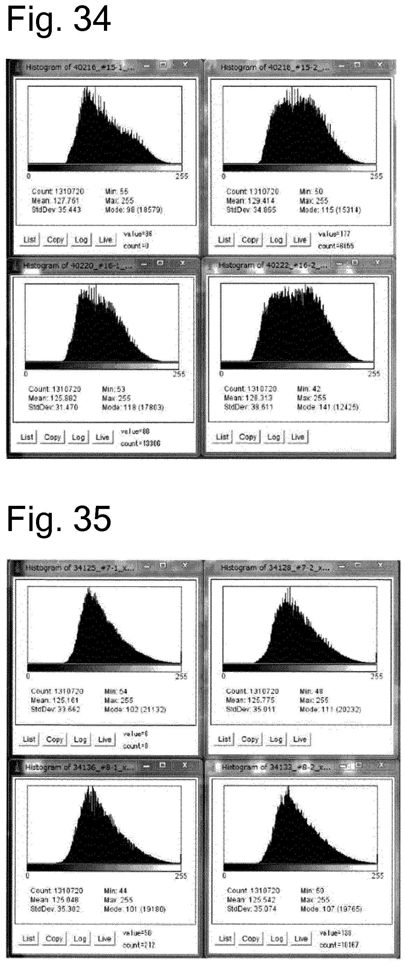

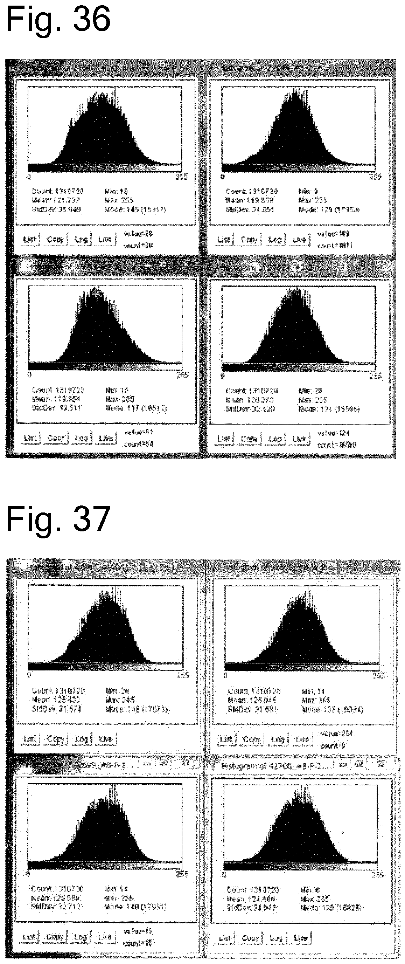

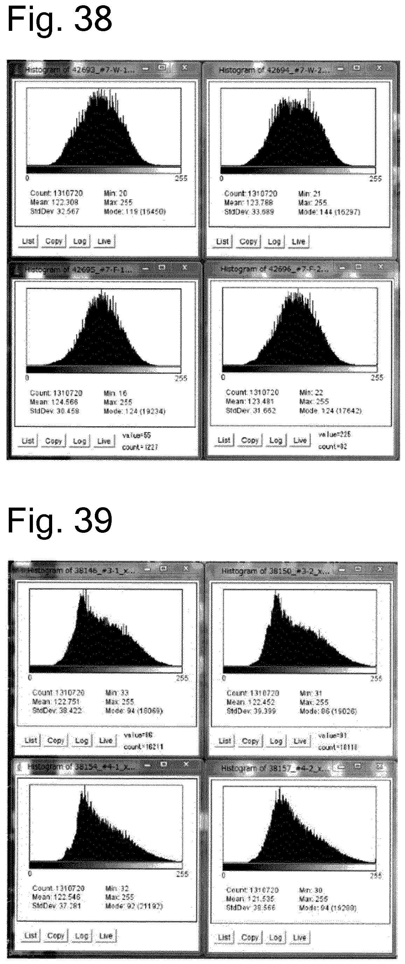

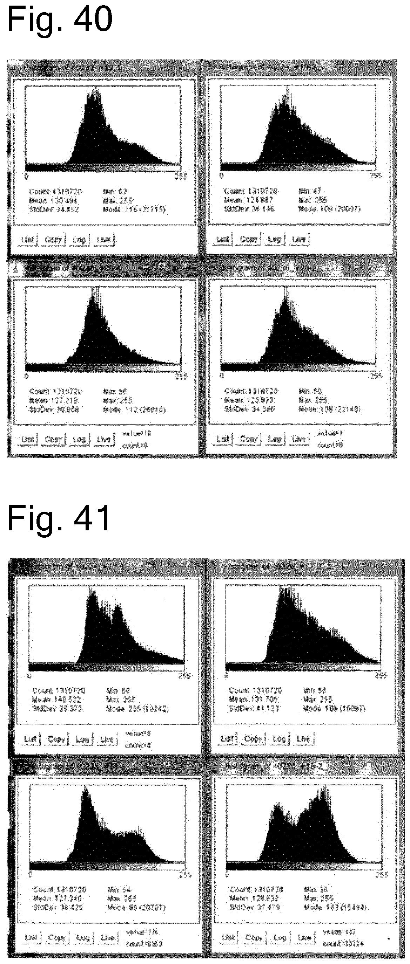

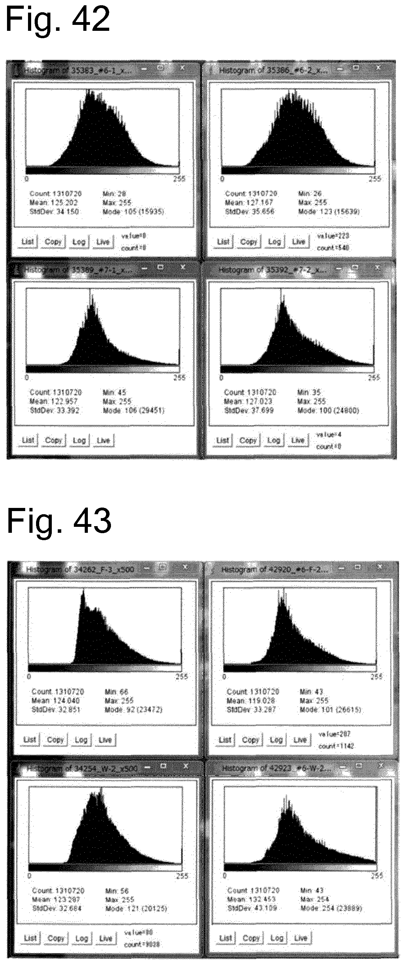

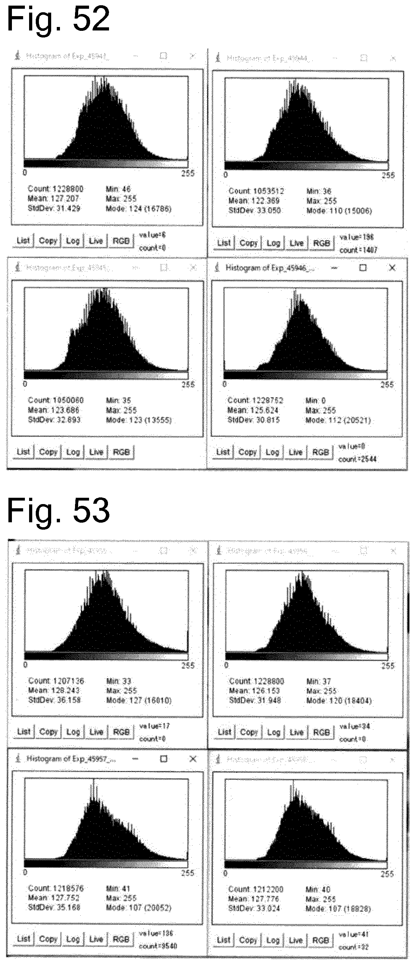

Then, histograms of the contrasts of the images were constructed, and the standard deviations ($\sigma$, StdDev) of the histograms were calculated (Figs. 28 to 44, and Figs. 52 to 53). In the histograms, the grayscale level was shown on the abscissa and the number of pixels was shown on the ordinate. The construction of the histograms and the calculation of the standard deviations were performed by selecting the "Analyze" tab and then "Histogram" of the image analysis software (ImageJ), wherein the standard deviations are the averages calculated from the data of the two randomized sites. Here, lower values of standard deviation mean images with narrower contrast distribution, namely images closer to monochrome (gray).

[Table 3]

| | Raw material used | Sheet properties | | | |
|---|---|---|---|---|---|
| | | Inorganic content (%) | Basis weight (g/m2) | Standard deviation <top side> | Standard deviation <bottom side> |
| Sheet 1 | Sample A (Complex fiber with calcium carbonate) | 45 | 65 | 31.4 | 32.9 |
| Sheet 2 | Sample B (Complex fiber with magnesium carbonate) | 47 | 330 | 28.3 | 29.4 |
| Sheet 3 | Sample C (Complex fiber with barium sulfate) | 70 | 60 | 31.4 | 29.5 |
| Sheet 4 | Sample D | 45 | 60 | 32.3 | 32.1 |
| Sheet 5 | (Complex fiber with barium sulfate) | 40 | 60 | 31.0 | 32.8 |
| Sheet 6 | Sample E (Complex fiber with hydrotalcite) | 45 | 250 | 31.3 | 30.6 |
| Sheet 7 | Sample F (Complex fiber with calcium carbonate) | 45 | 60 | 35.2 | 35.0 |
| Sheet 8 | Sample G (Complex fiber with magnesium carbonate) | 43 | 60 | 36.6 | 35.9 |
| Sheet 9 | Sample H (Complex fiber with barium sulfate) | 70 | 180 | 33.5 | 32.8 |
| Sheet 10 | Sample I (Complex fiber with barium sulfate) | 42 | 55 | 31.6 | 33.4 |
| Sheet 11 | | 37 | 55 | 33.1 | 31.1 |
| Sheet 12 | Sample J (Complex fiber with hydrotalcite) | 35 | 200 | 38.9 | 37.9 |
| Sheet 13 | Sample K (Complex fiber with hydrotalcite) | 25 | 104 | 32.2 | 31.9 |
| Sheet 14 | | 29 | 103 | 34.1 | 34.1 |
| Sheet a (Paper containing Ca carbonate) | Mixture (Pulp and calcium carbonate) | 50 | 60 | 35.3 | 32.8 |
| Sheet b (Paper containing Ca carbonate) | Mixture (Pulp and calcium carbonate) | 50 | 60 | 39.8 | 38.0 |
| Sheet c (Paper containing Al hydroxide) | Mixture (Pulp and Al hydroxide) | 60 | 155 | 34.9 | 35.5 |
| Sheet d (Paper containing Ca carbonate) | Mixture (Pulp and Ca carbonate) | 60 | 145 | 33.1 | 37.9 |
| Sheet e (Paper containing Mg silicate) | Mixture (Pulp and Mg silicate) | 80 | 180 | 27.2 | 33.7 |

The results of the standard deviations obtained are shown in the table. Sheets containing a complex fiber comprising a fiber and inorganic particles had a lower standard deviation as compared with simple mixtures of a fiber and inorganic particles. The reason for this may be explained as follows: when a fiber and an inorganic material exist in the same image, the fiber is observed as darker areas and the inorganic material is observed as brighter areas, and if the fiber is largely uncovered by the inorganic material on its surface, the contrast of the image polarizes into black areas of the fiber and white areas of the inorganic material, but if a complex fiber covered by the inorganic material on its surface predominates, black areas derived from the fiber decrease so that the image as a whole becomes closer to monochrome (gray).

According to the present invention, fiber structures obtained from complex fibers comprising a fiber covered by inorganic particles on its surface can be distinguished from fiber structures obtained by simply mixing the fiber and the inorganic particles, even if the fiber complexes contain the same weight percentage of the inorganic particles.

As shown in the table above, the values of standard deviation were 33 or less on both sides in the sheets (fiber structures) containing a complex fiber in which a fiber and inorganic particles are strongly complexed even if the complex fiber has a comparably high coverage ratio on the fiber surface calculated by SEM observation. The sheets formed from a complex fiber in which a fiber and inorganic particles are strongly complexed had very little fiber surface exposed, and also had high retention during sheet-forming so that freeness could be improved.

Experiment 4. Preparation and image analysis of fiber structure moldings

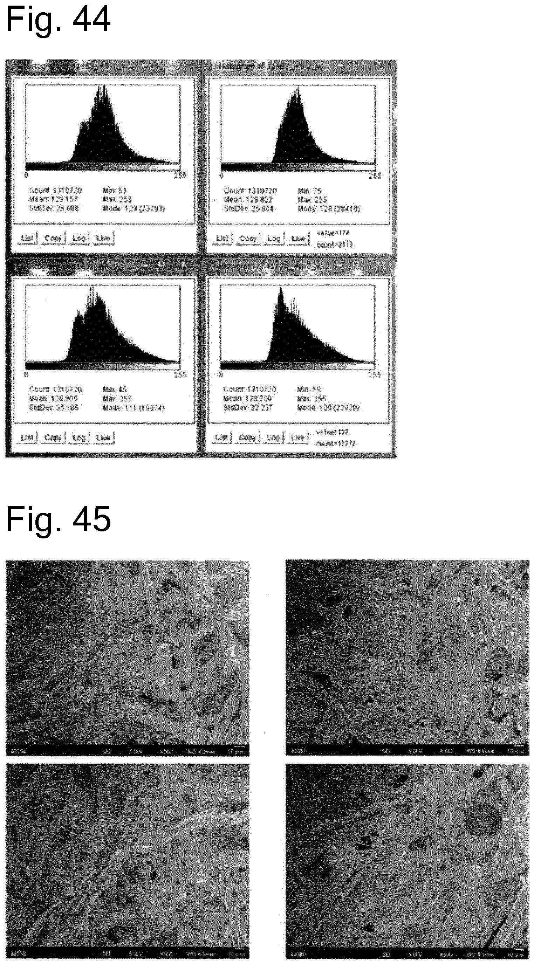

(Molding 1, Fig. 45)

In a 30-L bucket, a complex fiber (Sample C) obtained in Experiment 1 was diluted with tap water to prepare a slurry having a consistency of 0.6 % (20 L). A mold with a mesh bottom was attached to the cleaning end of a suction machine (liquid vacuum cleaner) and immersed in the bucket and the slurry in the bucket was sucked for about 5 seconds, after which the mold was lifted and suction was continued for 30 seconds. After the completion of suction, the cast was removed from the mold and dried in an oven at 100 °C for 3 hours to give a structure of the complex fiber.

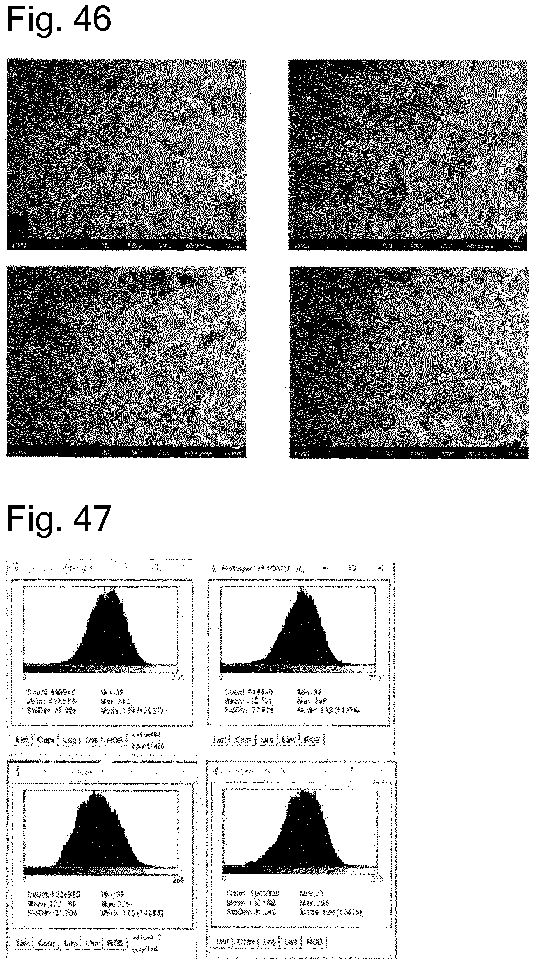

(Molding 2, Fig. 46)

A fiber structure was prepared in the same manner as described for Molding 1 except that the complex fiber used was Sample E.

(Inorganic content)

The fiber structures obtained were analyzed for their inorganic content (ash content) according to JIS P 8251: 2003.

(Image analysis)

Two-dimensional images of the surface of the fiber structures obtained were taken with a scanning electron microscope.

Specimens of 5 mm x 5 mm in dimensions were cut out from each molding sample, and attached to a specimen mount made from brass using a double-sided adhesive tape so that the side free from contact with the mold (top side) of one specimen and the side in contact with the mold (bottom side) of another specimen faced upward, respectively. The subsequent procedures took place under the same conditions as described in Experience 3 to determine the standard deviations of the image contrasts of the top and bottom sides.

[Table 4]

| | Raw material used (complex fiber) | Complex fiber | | | | Sheet properties | | | |
|---|---|---|---|---|---|---|---|---|---|
| | | Fiber | Inorganic particles | Inorganic content (%) | Fiber coverage ratio (%) | Inorganic content (%) | Thickness (mm) | Standard deviation <top side> | Standard deviation <bottom side> |
| Molding 1 | Sample C | LBKP | Barium sulfate | 75 | 85 | 70 | 1 | 27.4 | 31.3 |
| Molding 2 | Sample E | NBKP | Hydrotalcite | 51 | 95 | 45 | 1 | 30.3 | 32.2 |

The results of the standard deviations obtained are shown in the table. Similarly to the sheet samples, the molding samples containing a complex fiber comprising a fiber and inorganic particles had a low standard deviation, which was 33 or less in both samples.

**Claims**

1. A method for evaluating a structure comprising a fiber and inorganic particles, said method comprising the steps of:

(A) capturing a two-dimensional image of the surface of the fiber structure using a scanning electron microscope;
(B) denoising the captured image by adjusting each contrast value; and
(C) calculating the standard deviation of the contrast value after denoising.

2. The method of claim 1, wherein the fiber is a cellulose fiber.

3. The method of claim 1 or 2, wherein the inorganic particles at least partially comprise a metal salt of calcium, silicic acid, magnesium, barium or aluminum, or metal particles containing titanium, copper or zinc.

4. The method of any one of claims 1 to 3, wherein the fiber structure is in the form of a sheet.

5. The method of any one of claims 1 to 3, wherein the fiber structure is a molding.

6. A fiber structure formed from a complex fiber of a fiber with inorganic particles, which has a standard deviation value of 33 or less as determined by a method comprising the steps of:

(A) capturing a two-dimensional image of the surface of the fiber structure using a scanning electron microscope at a magnification of 500X;
(B) denoising the captured image by adjusting the contrast value of each pixel to the median of its neighboring 3 x 3 pixels (the fifth value) using a median filter; and
(C) calculating the standard deviation of the contrast value after denoising.

7. The fiber structure of claim 6, wherein the fiber is a cellulose fiber.

8. The fiber structure of claim 6 or 7, wherein the inorganic particles at least partially comprise a metal salt of calcium, silicic acid, magnesium, barium or aluminum, or metal particles containing titanium, copper or zinc.

9. The fiber structure of any one of claims 6 to 8, which is in the form of a sheet.

10. The fiber structure of any one of claims 6 to 8, which is a molding.

11. The fiber structure of any one of claims 6 to 10, which has a standard deviation value of 33 or less when determined on both sides of the fiber structure.

12. The fiber structure of any one of claims 6 to 11, which contains an internal additive having a molecular weight of 5,000,000 Da or more.

13. The fiber structure of any one of claims 6 to 12, which contains an internal additive having a charge density of -6 to +6 meq/g.

14. A process for preparing a fiber structure comprising a complex fiber of a fiber with inorganic particles, said process comprising the steps of:

(1) synthesizing inorganic particles in a solution in the presence of a fiber to give a complex fiber of the fiber with the inorganic particles; and
(2) forming a fiber structure from the complex fiber of the fiber with the inorganic particles; wherein the standard deviation of the fiber structure is determined by a method comprising the steps of:

(A) capturing a two-dimensional image of the surface of the fiber structure using a scanning electron microscope at a magnification of 500X;
(B) denoising the captured image by adjusting the contrast value of each pixel to the median of its neighboring 3 x 3 pixels (the fifth value) using a median filter; and
(C) calculating the standard deviation of the contrast value after denoising.

15. The process of claim 14, wherein the fiber structure has a standard deviation value of 33 or less when determined on both sides of the fiber structure.

16. The process of claim 14 or 15, wherein the fiber structure is formed into a predetermined shape by dewatering through a mesh element and then drying.

17. The process of any one of claims 14 to 16, wherein the fiber is a cellulose fiber.

18. The process of any one of claims 14 to 17, wherein the inorganic particles at least partially comprise a metal salt of calcium, silicic acid, magnesium, barium or aluminum, or metal particles containing titanium, copper or zinc.

19. The process of any one of claims 14 to 18, wherein the fiber structure is in the form of a sheet.

20. The process of any one of claims 14 to 18, wherein the fiber structure is a molding.

# Fig. 1A

# Fig. 1B

# Fig. 1C

Reaction solution                                     Pumping water

# Fig. 2A

# Fig. 2B

Fig. 3

Fig. 4

# Fig. 5

# Fig. 6

# Fig. 7

Fig. 8

Fig. 9

Fig. 10

## Fig. 11A

## Fig. 11B

## Fig. 12

## Fig. 13

Fig. 14

Fig. 15

## Fig. 16

## Fig. 17

## Fig. 18

## Fig. 19

## Fig. 20

## Fig. 21

Fig. 22

Fig. 23

Fig. 24

Fig. 25

# Fig. 26

# Fig. 27

# Fig. 28

# Fig. 29

## Fig. 30

## Fig. 31

# Fig. 32

# Fig. 33

# Fig. 34

# Fig. 35

# Fig. 36

# Fig. 37

# Fig. 38

# Fig. 39

# Fig. 40

# Fig. 41

# Fig. 42

# Fig. 43

# Fig. 44

# Fig. 45

Fig. 46

Fig. 47

# Fig. 48

# Fig. 49

# Fig. 50

# Fig. 51

# Fig. 52

# Fig. 53

## INTERNATIONAL SEARCH REPORT

International application No.

PCT/JP2019/024885

### A. CLASSIFICATION OF SUBJECT MATTER

Int.Cl. G01N23/2251(2018.01)i, D21H17/70(2006.01)i

According to International Patent Classification (IPC) or to both national classification and IPC

### B. FIELDS SEARCHED

Minimum documentation searched (classification system followed by classification symbols)

Int.Cl. G01N23/00-23/2276, D21H17/70

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2018-119220 A (NIPPON PAPER INDUSTRIES CO., LTD.)<br>02 August 2018, paragraphs [0019]–[0115]<br>(Family: none) | 6-13<br>1-5, 14-20 |
| A | JP 6-158585 A (AUSSEDAT-REY) 07 June 1994<br>& US 5731080 A & GB 2265916 A & FR 2689530 A1 | 1-20 |
| A | US 2018/0119361 A1 (ZHAO et al.) 03 May 2018<br>(Family: none) | 1-20 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>13.08.2019 | Date of mailing of the international search report<br>27.08.2019 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6158585 A
- US 5679220 A

- JP 60006619 A